# EUROPEAN PATENT APPLICATION

(11) **EP 4 837 936 A1**
(43) Date of publication of application: **11.11.2026**
(21) Application number: 25305646.9
(22) Date of filing: 06.05.2025
(51) Int. Cl.: C09B 57/00, C09B 57/02, H01G 9/20

(54) **PANCHROMATIC PHOTOCHROMIC DYE AND USES THEREOF IN COATINGS AND FOR DYE SENSITIZED SOLAR CELLS**

(71) Applicant: Commissariat à l'Energie Atomique et aux Energies Alternatives, 75015 Paris (FR); Centre National de la Recherche Scientifique, 75016 Paris (FR); Université Grenoble Alpes, 38400 Saint Martin d'Hères (FR)
(72) Inventor: DEMADRILLE, Renaud, 38054 GRENOBLE CEDEX 9 (FR); MIRANI, Diego, 38054 GRENOBLE CEDEX 9 (FR)
(74) Representative: Santarelli

(57) **Abstract**

The present invention concerns a panchromatic photochromic naphthopyran dye with a push-pull structure containing ferrocenyl group as electron-donor moiety and electron-withdrawing group allowing anchoring the molecules on semiconductor surfaces. The present invention also concerns its use in solution or to prepare photochromic coatings, either after grafting onto metal oxide surfaces or by dispersion in a polymeric matrix. It can also be used as photosensitizers in dye-sensitized solar cells (DSSCs).

## Description

### TECHNICAL FIELD

The present invention belongs to the field of organic and organometallic dyes and in particular of photochromic dyes.

More particularly, the present invention relates to panchromatic photochromic naphthopyran dyes with a push-pull structure containing ferrocenyl group as electron-donor moiety and electron-withdrawing group allowing anchoring the molecules on semiconductor surfaces.

The present invention relates to the use of these dyes to prepare photochromic coatings, either after grafting onto metal oxide surfaces or by dispersion in a polymeric matrix. They can also be used as photosensitizers in dye-sensitized solar cells (DSSCs).

### STATE OF THE PRIOR ART

A photochromic dye is a molecule that can exist in the form of isomers, which have different absorption spectra. The conversion from the uncolored form to the colored one is obtained in the presence of light (generally UV light). Among the different families of photochromic dyes, the dyes of the diphenylnaphthopyran family usually show absorption in the visible range under irradiation, and a selective absorption of visible wavelengths. Therefore, they show a specific color due to this narrow and selective absorption.

### Application in photochromic coatings

Photochromic dyes have primarily been used in photoactive coatings to modulate the transmission of light, for example in commercial optical lenses. In optical lenses, the aim of photochromic dyes is to have a device that is highly transparent (high AVT) at night or in low light conditions, and highly colored (low AVT) during the day or in high light conditions. This was already achieved with the use of naphthopyran dyes given their ability to transition to the colorful and transparent form accordingly to light irradiance.

However, it is important to avoid color distortion of objects in optical lenses or in coatings that could be used as glazing, the aim being to obtain a photochromic layer with the most neutral coloration, both in inactive and active form (high CRI).

Neutral coloring is generally achieved by mixing dyes that absorb in different regions of the visible spectrum to achieve homogeneous absorption and neutral coloring. The problem in this case is that the dyes must have the same coloration and discoloration kinetics to avoid the photochromic layer passing through different color states during its coloration and discoloration phases. This has always been a challenge in the photochromic lens industry.

To obtain a broader absorption in naphthopyran moieties, one strategy, first investigated by Anguille *et al,* is to introduce a ferrocene group [1,2]. In their study, the replacement of a phenyl group in a naphthopyran molecule with a ferrocene was investigated. By comparing the absorption spectra of the molecule with and without the metallocene, both in the open form, they observed that a new complementary absorption band was formed as higher wavelengths. The molecule with only phenyl groups showed a single large absorption at 469 nm, whereas in the presence of the ferrocene, two absorption bands were observed at 467 nm and 600 nm. This confirms that by incorporating a ferrocene moiety into a naphthopyran molecule the absorption in the visible region can be extended. However, this is not sufficient to obtain a dye showing a panchromatic absorption.

### Application in photovoltaic coatings

In the last years, we have developed dyes for application in semi-transparent devices that show photovoltaic properties. Dye-sensitized solar cells (DSSCs) are cost-effective photovoltaic devices that exploit inorganic or organic dyes grafted on semiconductor electrodes to generate electricity. They are tunable, and can be made in various colors, opaque or semi-transparent.

The sensitizer is the critical component of the DSSC and plays a central role in device performance as it governs light absorption, generation of free charges and injecting electrons into the electrode. Due to this importance, significant research has been dedicated to developing new, more efficient sensitizers to enhance DSSC performance. Historically, DSSCs were first developed using non photochromic ruthenium-based sensitizers and liquid redox electrolytes, which delivered promising initial results. Among the various sensitizers studied, organometallic coordination dyes, like N3 **[3]** and N719 **[4],** have demonstrated outstanding performance, with some being commercialized at benchmark efficiencies around 10%.

In recent years, however, the evolution of organic synthetic chemistry among organic semiconductors pushed the research on metal-free sensitizers. Push-pull organic sensitizers offer great versatility in molecular design and have an abundance of functional groups, making them increasingly appealing for DSSC applications. Several organic dyes, such as YKP88 **[5]** have been developed with improved efficiency, reaching up to 11% **[6],** thanks to their ability to reduce unwanted recombination processes and enhance performance. The high efficiency of these organic dyes is often attributed to their Donor-π-Acceptor (D-π-A) structure. Upon absorbing a photon, the dye excites an electron from the highest occupied molecular orbital (HOMO) located on the donor to the lowest unoccupied molecular orbital (LUMO) on the acceptor. The electron then transfers from the sensitizer to the semiconductor nanoparticles through an anchoring function and is collected by the electrode to generate current in the external circuit. This structure that features a pi-conjugated system with donor and acceptor groups at opposite ends offers as well great tunability as it is possible to exchange the different donor, acceptor or pi-conjugated moiety to change the properties of the dye.

While DSSCs achieve over 15% efficiency outdoors, they perform exceptionally well indoors, reaching up to 34% efficiency, making them ideal for building-integrated photovoltaic (BIPV) applications like energy-harvesting transparent smart windows. However, windows made with conventional dyes cannot adapt their light transmission depending on the level of irradiation.

### Application in photochromic photovoltaic coatings

A couple of years ago the inventors have developed a novel concept in DSSCs, photochromic DSSCs (See International application WO/2018/215371 [7]). These solar cells use photochromic dyes as sensitizers, thus dyes that can adapt their coloration, and their light transmission, depending on the light irradiation. Under illumination, these dyes transition between a non-colored, closed form (CF) to a colored, open form (OF). When the dye is the OF, the conjugation of the donor and acceptor parts of the dye is replenished, the band gap is reduced and the molecule can act as a photosensitiser. This isomerisation is fully reversible and the reconversion from OF to CF is thermally controlled by thermodynamics. These properties allow to have solar cells that are transparent during the night and dark during the day producing electricity **[8].** The degree of coloration is proportional to the intensity of the light.

In photochromic systems, equilibrium is reached when the rates of the forward and reverse reactions are balanced under continuous light exposure, a condition known as the photo-stationary state (PSS). At PSS, the proportions of the photochromic states remain stable, allowing light absorption and energy conversion. From now on, PSS will refer to this stabilized state during light irradiation.

The main problem in the application of diphenyl-naphthopyran dyes in smart windows is still the fact that these sensitizers, once activated, exhibit narrow or selective absorption, resulting in a specific color transmitted through the devices.

Having a semi-transparent solar cell that present a specific coloration as smart window would alter the vision of the users inside the building. The light and color perception of the human eye of a light source that is transmitted through an object can be quantified by two different indexes: Average Visible Transmittance (AVT) and Color Rendering Index (CRI). The AVT represents an index to quantify the light transmission through a surface normalized on the photopic response of the human eye. The CRI represents an index to determine how accurately a color of a given object is rendered through the surface in analysis.

The problem of the coloration was previously addressed in many different ways. One possibility is to implement co-sensitization in the device fabrication that means mixing different dyes with complementary absorption. However, the kinetic of absorption of the different dyes can be slightly different. This means that the coloration of one dye could be stronger. The same thing can happen with the kinetics of coloration and discoloration leading to residual coloration of one dye during the deactivation process.

Another possibility is to tune the chemical structure of the dye to obtain a single sensitizer with a selective absorption that matches the photopic response of the human eye. This method has been verified by the synthesis and analysis of a push-pull dye called SF4, which has a beige color and a high CRI **[9].**

However, this method leads to the design of dyes that have a selective and rather limited absorption in the visible range. It would therefore be more appropriate to design photochromic dyes capable of absorbing after activation all wavelengths of the visible spectrum continuously and homogeneously i.e. a panchromatic photochromic dye.

The ferrocenyl moiety has attracted the interest of researchers for application in DSSCs due to its stable redox properties and the versatile oxidation state of the iron in the complex (Fe³⁺/Fe²⁺). At first, ferrocene was studied to be a redox mediator to put in solar cell electrolyte, and then ferrocene was developed an interesting donor moiety for photosensitizers in DSSCs. By implementing DFT modelling, these studies were able to show that when coupling the metallocene group with an acceptor moiety it is indeed possible to have a strong HOMO located on the ferrocene, hence a good donor character in this position. Given these results a lot of different push-pull structures were synthesized that allowed to reach efficiency above 4.96% with D1, a ferrocene-based dye coupled with a cyanoacrylic group acceptor **[10].**

As things stand, there thus exists a real need to have available panchromatic photochromic dyes i.e. photochromic dyes capable of homogeneously absorbing photons in the visible range up to the Near Infrared boundary not only for photochromic and/or photovoltaic coatings but also for sensitizing wide bandgap metal oxides in a DSSC configuration.

### DISCUSSION OF THE INVENTION

The present invention makes it possible to resolve all or part of the technical problems listed above.

Indeed, the present inventors have found that using a ferrocene moiety instead of a triarylamine moiety in a push-pull photochromic naphthopyran dye with an electron-withdrawing anchoring function is a successful strategy to create photochromic dyes with panchromatic absorption across the visible range. This gives rise to dyes that can change color and present a panchromatic coloration at the open form, after illumination.

The organic photochromic dyes of the present invention are different from the prior art photochromic dyes of the prior art in that they have a broad absorption over the visible range. The use of the ferrocenyl unit to create a push-pull effect gives rise to an extended absorption band in the active open form upon irradiation, resulting in dyes that absorb homogeneously from the UV (ultraviolet) to the NIR (near infrared) region. The dyes of the present invention show a panchromatic absorption, which is new for this class of dyes. The absorption spectra of the molecule and the kinetics of isomerization between the closed and the open form can be tuned with molecular engineering, in particular by changing the acceptor unit or incorporating different hindered groups.

The present inventors have found that by using a ferrocenyl moiety in a push-pull structure with a photochromic core, it is possible to have a molecule with neutral coloration in both states. Under irradiation, the absorption is extended into the near-infrared and gives a more homogeneous absorption over the visible range. This was not at all obvious for the one skilled in the art knowing the results presented by Anguille *et al* **[1,2]** in which, even if the incorporating a ferrocene moiety into a naphthopyran molecule induces an extension of the absorption in the visible region but in no way a panchromatic absorption.

Some of the organic dyes of the present invention retain their photochromic properties in solution, in the solid state after dispersion in a polymer matrix or after grafting onto the surface of a wide band gap metal oxide such as TiO₂. The inventors therefore propose new panchromatic photochromic dyes allowing fabricating coatings capable of adapting their absorption as a function of light intensity while maintaining a neutral color.

In other words, they have discovered that the dyes of the present invention can be used to manufacture various coatings with photochromic properties and that they are also adapted for photovoltaic applications as photosensitizers in dye-sensitized solar cells. Their unique optical and redox properties open up new areas of application for photochromic dyes such as solar cells, photochromic coatings, and new chemical sensing devices.

Thus, the present invention relates to an panchromatic photochromic dye presenting the following formula (I): 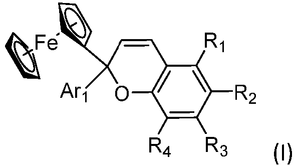
in which
   - the radical Ar₁ represents an aryl group optionally substituted;
   - the radicals R₁ to R₄, identical or different, represent a hydrogen, a halogen, a cyano group (-CN), a nitro group (-NO₂), an alkyl group optionally substituted, an aryl group optionally substituted, an alkylaryl group optionally substituted or an arylalkyl group optionally substituted; the radicals R₁ and R₂ may form with the carbons to which they are attached a ring system eventually substituted, the radicals R₂ and R₃ may form with the carbons to which they are attached a ring system eventually substituted and the radicals R₃ and R₄ may form with the carbons to which they are attached a ring system eventually substituted; and
in which at least one element selected in the group consisting of the radical Ar₁, the radical R₁, the radical R₂, the radical R₃, the radical R₄, the ring system formed by the radicals R₁ and R₂ with the carbons to which they are attached, the ring system formed by the radicals R₂ and R₃ with the carbons to which they are attached and the ring system formed by the radicals R₃ and R₄ with the carbons to which they are attached is a segment -L-A or is substituted by a segment -L-A, with
-L- representing a covalent bond or a spacer segment and particularly a pi-conjugated spacer segment, and
-A representing an electron attractor segment able to form a covalent bond with a semi-conductor.

In the following and preceding text, the expressions "dye(s) according to the present invention", "photochromic dye(s) according to the present invention" and "panchromatic photochromic dye(s) according to the present invention" are equivalent and can be used interchangeably.

"Alkyl group" is taken to mean, within the scope of the present invention, a linear, branched or cyclic alkyl group, comprising from 1 to 20 carbon atoms, particularly from 1 to 15 carbon atoms and in particular, from 1 to 10 carbon atoms, which can optionally comprise at least one heteroatom and/or at least one carbon-carbon double bonds or triple bonds, such as, for example, a methyl, ethyl, n-propyl, isopropyl, butyl, isobutyl, sec-butyl, tert-butyl, pentyl, isopentyl, hexyl, heptyl, octyl or nonyl group.

"Aryl group" is taken to mean, within the scope of the present invention, any functional group or substituent derived from at least one simple aromatic ring wherein an aromatic ring corresponds to any planar cyclic compound having a delocalized π system in which each atom of the ring comprises a p-orbital, said p-orbitals overlapping themselves. An aryl group comprises one aromatic ring or several aromatic rings identical or different joined or connected by a single bond or by a hydrocarbon group, each ring having from 4 to 20 carbon atoms, particularly from 4 to 14 carbon atoms, in particular, from 4 to 8 carbon atoms and which can optionally comprise at least one heteroatom. As examples of aryl group, phenyl, biphenyl, naphthyl, anthracenyl, cyclopentadienyl, pyrenyl, tetrahydronaphthyl, furanyl, pyrrolyl, thiophenyl, oxazolyl, pyrazolyl, isoquinolinyl, thiazolyl, imidazolyl, triazolyl, pyridinyl, pyranyl, quinolinyl, pyrazinyl and pyrimidinyl groups may be cited. An aryl group can be substituted.

"Alkylaryl group" is taken to mean, within the scope of the present invention, any group derived from an aryl group as defined above wherein a hydrogen atom is replaced by an alkyl group as defined above.

"Arylalkyl group" is taken to mean, within the scope of the present invention, any group derived from an alkyl group as defined above wherein a hydrogen atom is replaced by an aryl group as defined above.

"Ring system" is taken to mean, within the scope of the present invention, either a monocycle or simple ring, or a polycycle or polycyclic ring system. When the ring system is a monocycle, the latter can comprise at least one hereroatom and/or can be aromatic. When the ring is a polycycle, the latter can present at least one first cycle comprising at least one hereroatom and/or at least one second cycle which is aromatic, the at least one first cycle and the at least second cycle being the same cycle or different cycles.

"Substituted alkyl group", "substituted aryl group", "substituted alkylaryl group", "substituted arylalkyl group" or "substituted ring system" are taken to mean, within the scope of the present invention, an alkyl, aryl, alkylaryl or arylalkyl group or a ring system as defined previously substituted by a group or several groups, identical or different, selected from the group consisting of a halogen; an amine; a diamine; a carboxyl; a carboxylate; an aldehyde; an ester; an ether; a hydroxyl; a halogen; an aryl optionally substituted as defined previously and particularly such as a phenyl, a benzyl or a naphthyl; an alkyl optionally substituted as defined previously and particularly such as a methyl, an ethyl, a propyl or a hydroxypropyl; an amide; a sulphonyl; a sulphoxide; a sulphonic acid; a sulphonate; an acyl; a vinyl; a hydroxyl; an epoxy; a phosphonate; an isocyanate; a thiol; a glycidoxy; an acryloxy; a thiophene; a furan; a selenophene, a segment -L-A and salts thereof.

It is clear that, among the substituents considered for substituting an alkyl, aryl, alkylaryl or arylalkyl group or a ring system, some may be electron donor segments.

"Heteroatom" is taken to mean, within the scope of the present invention, an atom chosen from the group consisting of nitrogen, oxygen, phosphorous, sulphur, silicon, and halogen, and in particular in the group consisting of nitrogen, oxygen, phosphorous, sulphur, silicon, fluorine, chlorine and bromine.

"Halogen" is taken to mean, within the scope of the present invention, an atom chosen from the group consisting of fluorine, chlorine, iodine and bromine. Advantageously, when a halogen is implemented in the present invention, it is a fluorine or a chlorine.

In a 1^{st} embodiment, the radicals R₁ and R₂ in the dye of formula (I) according to the present invention form with the carbons to which they are attached a ring system.

In particular, in this 1^{st} embodiment, the dye according to the invention presents the following formula (II): 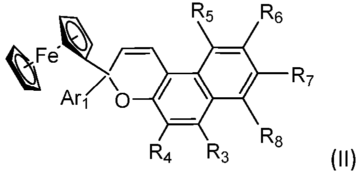
in which
   - the radicals Ar₁, R₃ and R₄ are as previously defined;
   - the radicals R₅ to R₈, identical or different, represent a hydrogen, a halogen, a cyano group (-CN), a nitro group (-NO₂), an alkyl group optionally substituted, an aryl group optionally substituted, an alkylaryl group optionally substituted, an arylalkyl group optionally substituted, or a segment -L-A; the radicals R₅ and R₆ may form with the carbons to which they are attached a ring system eventually substituted, the radicals R₆ and R₇ may form with the carbons to which they are attached a ring system eventually substituted and the radicals R₇ and R₈ may form with the carbons to which they are attached a ring system eventually substituted and
in which at least one element selected in the group consisting of the radical Ar₁, the radical R₃, the radical R₄, the radical R₅, the radical R₆, the radical R₇ and the radical R₈ is a segment -L-A as previously defined or is substituted by a segment -L-A as previously defined.

More particularly, in this 1^{st} embodiment, the dye according to the invention presents the following formula (III): 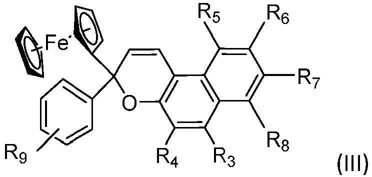
in which
   - the radicals R₃ to R₈ are as previously defined;
   - the radical R₉ represents a hydrogen, a halogen, a cyano group (-CN), a nitro group (-NO₂), an alkyl group optionally substituted, an aryl group optionally substituted, an alkylaryl group optionally substituted, an arylalkyl group optionally substituted or a segment -L-A; and
in which at least one element selected in the group consisting of the radical R₃, the radical R₄, the radical R₅, the radical R₆, the radical R₇, the radical R₈ and the radical R₉ is a segment -L-A as previously defined or is substituted by a segment -L-A as previously defined.

Advantageously, in the dyes of formula (II) or (III), the radicals R₃ and R₄ are identical and both represent a hydrogen, a halogen, a cyano group (-CN), a nitro group (-NO₂), an alkyl group optionally substituted, an aryl group optionally substituted, an alkylaryl group optionally substituted or an arylalkyl group optionally substituted. More advantageously, in the organic dyes of formula (II) or (III), the radicals R₃ and R₄ are identical and both represent a hydrogen.

Advantageously, in the dyes of formula (II) or (III) as previously defined, in a 1^{st} variant of the 1^{st} embodiment, the radicals R₅, R₆ and R₈ are identical and selected in the group consisting a hydrogen, a halogen, a cyano group (-CN), a nitro group (-NO₂), an alkyl group optionally substituted, an aryl group optionally substituted, an alkylaryl group optionally substituted and an arylalkyl group optionally substituted. More advantageously, in the organic dyes of formula (II) or (III), the radicals R₅, R₆ and R₈ represent a hydrogen. Even more advantageously, the radical R₇ is a segment-L-A or an aryl group substituted by a segment -L-A.

Advantageously, in the dyes of formula (II) or (III) as previously defined, in a 2^{nd} variant of the 1^{st} embodiment, the radicals R₅, R₇ and R₈ are identical and selected in the group consisting a hydrogen, a halogen, a cyano group (-CN), a nitro group (-NO₂), an alkyl group optionally substituted, an aryl group optionally substituted, an alkylaryl group optionally substituted and an arylalkyl group optionally substituted. More advantageously, in the organic dyes of formula (II) or (III), the radicals R₅, R₇ and R₈ represent a hydrogen. Even more advantageously, the radical R₆ is a segment-L-A or an aryl group substituted by a segment -L-A.

In these 1^{st} and 2^{nd} variants, the radical R₉ is selected in the group consisting a hydrogen, a halogen, a cyano group (-CN), a nitro group (-NO₂), an alkyl group optionally substituted, an aryl group optionally substituted, an alkylaryl group optionally substituted and an arylalkyl group optionally substituted and, advantageously, the radical R₉ represents a hydrogen.

Advantageously, in the dyes of formula (II) or (III) as previously defined, in a 3^{rd} variant of the 1^{st} embodiment, the radicals R₅, R₆, R₇ and R₈ are identical and selected in the group consisting a hydrogen, a halogen, a cyano group (-CN), a nitro group (-NO₂), an alkyl group optionally substituted, an aryl group optionally substituted, an alkylaryl group optionally substituted and an arylalkyl group optionally substituted. More advantageously, in the organic dyes of formula (II) or (III), the radicals R₅, R₆, R₇ and R₈ represent a hydrogen. Even more advantageously, the radical R₉ is a segment-L-A or an aryl group substituted by a segment -L-A.

In a 2^{nd} embodiment, the radicals R₃ and R₄ in the dye of formula (I) according to the present invention form with the carbons to which they are attached a ring system.

In particular, in this 2^{nd} embodiment, the dye according to the invention presents the following formula (IV): 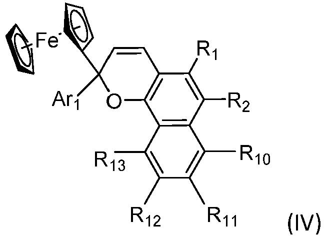
in which
   - the radicals Ar₁, R₁ and R₂ are as previously defined;
   - the radicals R₁₀ to R₁₃, identical or different, represent a hydrogen, a halogen, a cyano group (-CN), a nitro group (-NO₂), an alkyl group optionally substituted, an aryl group optionally substituted, an alkylaryl group optionally substituted, an arylalkyl group optionally substituted or a segment -L-A; and
in which at least one element selected in the group consisting of the radical Ar₁, the radical R₁, the radical R₂, the radical R₃, the radical R₁₀, the radical R₁₁, the radical R₁₂ and the radical R₁₃ is a segment -L-A as previously defined or is substituted by a segment - L-A as previously defined.

More particularly, in this 2^{nd} embodiment, the dye according to the invention presents the following formula (V): 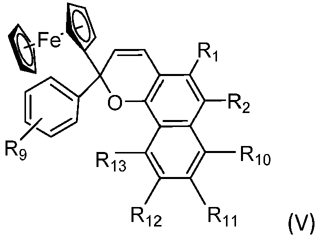
in which
   - the radicals R₁, R₂, R₉ to R₁₃ are as previously defined; and
in which at least one element selected in the group consisting of the radical R₁, the radical R₂, the radical R_{g}, the radical R₁₀, the radical R₁₁, the radical R₁₂ and the radical R₁₃ is a segment -L-A as previously defined or is substituted by a segment -L-A as previously defined.

Advantageously, in the dyes of formula (IV) or (V) as previously defined, the radical R₁₀, the radical R₁₁, the radical R₁₂, the radical R₁₃ are identical and represent a hydrogen, a halogen, a cyano group (-CN), a nitro group (-NO₂), an alkyl group optionally substituted, an aryl group optionally substituted, an alkylaryl group optionally substituted or an arylalkyl group optionally substituted. More advantageously, in the dyes of formula (IV) or (V) as previously defined, the radical R₁₀, the radical R₁₁, the radical R₁₂, the radical R₁₃ are identical and represent a hydrogen.

In a 1^{st} variant of the dyes of formula (IV) or (V) as previously defined, the radicals R₁ and R₂ are different and selected in the group consisting a hydrogen, a halogen, a cyano group (-CN), a nitro group (-NO₂), an alkyl group optionally substituted, an aryl group optionally substituted, an alkylaryl group optionally substituted, an arylalkyl group optionally substituted and a segment -L-A. Advantageously, in the dyes of formula (IV) or (V) as previously defined, the radical R₁ represents a hydrogen and the radical R₂ is a segment -L-A or an aryl group substituted by a segment -L-A.

In a 2^{nd} variant of the dyes of formula (IV) or (V) as previously defined, the radicals R₁ and R₂ are identical and represent a hydrogen, a halogen, a cyano group (-CN), a nitro group (-NO₂), an alkyl group optionally substituted, an aryl group optionally substituted, an alkylaryl group optionally substituted or an arylalkyl group optionally substituted. Advantageously, in this variant of the dyes of formula (IV) or (V) as previously defined, the radicals R₁ and R₂ are identical and represent a hydrogen or an alkyl group optionally substituted. More advantageously, in this variant of the dyes of formula (IV) or (V) as previously defined, the radicals R₁ and R₂ are identical and represent a hydrogen or a methyl. In this variant, the radical R₉ is a segment -L-A or an aryl group substituted by a segment -L-A.

In a 3^{rd} embodiment, the radicals R₁ and R₂ in the dye of formula (I) according to the present invention form with the carbons to which they are attached a ring system optionally substituted and the radicals R₃ and R₄ in the dye of formula (I) according to the present invention form with the carbons to which they are attached a ring system optionally substituted.

In a 1^{st} variant of this 3^{rd} embodiment, the dye according to the invention presents the following formula (VI): 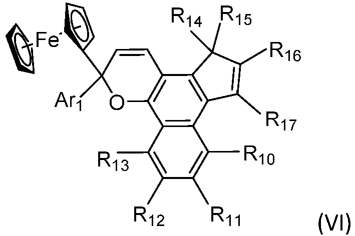
in which
   - the radicals Ar₁ and R₁₀ to R₁₃ are as previously defined;
   - the radicals R₁₄ to R₁₇, identical or different, represent a hydrogen, a halogen, a cyano group (-CN), a nitro group (-NO₂), an alkyl group optionally substituted, an aryl group optionally substituted, an alkylaryl group optionally substituted or an arylalkyl group optionally substituted; the radicals R₁₄ and R₁₅ may form together a =O or =C(R₂₃)(R₂₄) group with the radicals R₂₃ and R₂₄, identical or different, representing a hydrogen, a halogen, a cyano group (-CN), a nitro group (-NO₂), an alkyl group optionally substituted, an aryl group optionally substituted, an alkylaryl group optionally substituted or an arylalkyl group optionally substituted and the radicals R₁₆ and R₁₇ may form with the carbons to which they are attached a ring system eventually substituted; and
in which at least one element selected in the group consisting of the radical Ar₁, the radical R₁₀, the radical R₁₁, the radical R₁₂, the radical R₁₃, the radical R₁₄, the radical R₁₅, the radical R₁₆, the radical R₁₇, the radical R₂₃ and the radical R₂₄ and the ring system formed by the radicals R₁₆ and R₁₇ with the carbons to which they are attached is a segment -L-A as previously defined or substituted by a segment -L-A as previously defined.

In a 2^{nd} variant of this 3^{rd} embodiment, the dye according to the invention presents the following formula (VII): 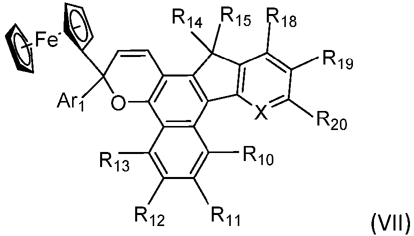
in which
   - the radicals Ar₁ and R₁₀ to R₁₅ are as previously defined;
   - X represents C(R₂₅) or N;
   - the radicals R₁₈ to R₂₀, identical or different, represent a hydrogen, a halogen, a cyano group (-CN), a nitro group (-NO₂), an alkyl group optionally substituted, an aryl group optionally substituted, an alkylaryl group optionally substituted, an arylalkyl group optionally substituted or a segment -L-A;
   - the radical R₂₅ represents a hydrogen, a halogen, a cyano group (-CN), a nitro group (-NO₂), an alkyl group optionally substituted, an aryl group optionally substituted, an alkylaryl group optionally substituted or an arylalkyl group optionally substituted; and
in which at least one element selected in the group consisting of the radical Ar₁, the radical R₁₀, the radical R₁₁, the radical R₁₂, the radical R₁₃, the radical R₁₄, the radical R₁₅, the radical R₁₈, the radical R₁₉, the radical R₂₀, the radical R₂₃, the radical R₂₄ and the radical R₂₅ is a segment -L-A as previously defined or is substituted by a segment -L-A as previously defined.

In particular, in this 2^{nd} variant of this 3^{rd} embodiment, the dye according to the invention presents the following formula (VIII): 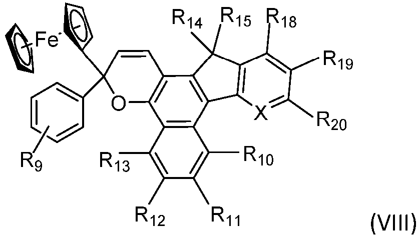
in which X, the radicals R₉ to R₁₅ and R₁₈ to R₂₀ are as previously defined; and
in which at least one element selected in the group consisting of the radical Ar₁, the radical R₉, the radical R₁₀, the radical R₁₁, the radical R₁₂, the radical R₁₃, the radical R₁₄, the radical R₁₅, the radical R₁₈, the radical R₁₉, the radical R₂₀, the radical R₂₃, the radical R₂₄ and the radical R₂₅ is a segment -L-A as previously defined or is substituted by a segment - L-A as previously defined.

Advantageously, in the dyes of formula (VII) or (VIII) as previously defined, the radical R₁₀, the radical R₁₁, the radical R₁₂, the radical R₁₃ are identical and represent a hydrogen, a halogen, a cyano group (-CN), a nitro group (-NO₂), an alkyl group optionally substituted, an aryl group optionally substituted, an alkylaryl group optionally substituted or an arylalkyl group optionally substituted. More advantageously, in the dyes of formula (VII) or (VIII) as previously defined, the radical R₁₀, the radical R₁₁, the radical R₁₂, the radical R₁₃ are identical and represent a hydrogen.

Advantageously, in the dyes of formula (VII) or (VIII) as previously defined, the radicals R₁₈ and R₂₀ are identical and the radical R₁₉ are different therefrom. More advantageously, the radicals R₁₈ and R₂₀ are selected in the group consisting of a hydrogen, a halogen, a cyano group (-CN), a nitro group (-NO₂), an alkyl group optionally substituted, an aryl group optionally substituted, an alkylaryl group optionally substituted and an arylalkyl group optionally substituted. More advantageously, in the organic dyes of formula (VII) or (VIII) as previously defined, the radicals R₁₈ and R₂₀ are identical and represent a hydrogen and the radical R₁₉ is a segment -L-A or an aryl group substituted by a segment - L-A.

Advantageously, in the dyes of formula (VII) or (VIII) as previously defined, X represents CH.

In a 3^{rd} variant of this 3^{rd} embodiment, the dye according to the invention presents the following formula (IX): 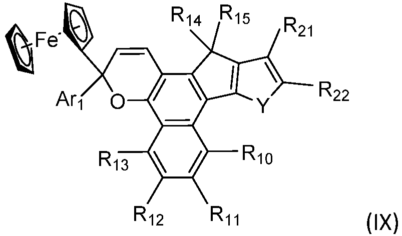
in which
   - the radicals Ar₁ and R₁₀ to R₁₅ are as previously defined;
   - Y represents C(R₂₆)(R₂₇), C(=O), S, Se, O, N(R₂₈), P(R₂₉) or Si(R₃₀)(R₃₁);
   - the radicals R₂₁ and R₂₂, identical or different, represent a hydrogen, a halogen, a cyano group (-CN), a nitro group (-NO₂), an alkyl group optionally substituted, an aryl group optionally substituted, an alkylaryl group optionally substituted, an arylalkyl group optionally substituted or a segment -L-A;
   - the radicals R₂₆ to R₃₁, identical or different, represent a hydrogen, an alkyl group optionally substituted, an aryl group optionally substituted, an alkylaryl group optionally substituted or an arylalkyl group optionally substituted; and
in which at least one element selected in the group consisting of the radical Ar₁, the radical R₁₀, the radical R₁₁, the radical R₁₂, the radical R₁₃, the radical R₁₄, the radical R₁₅, the radical R₂₁, the radical R₂₂, the radical R₂₃, the radical R₂₄ and the radical R₂₅ is a segment -L-A as previously defined or is substituted by a segment -L-A as previously defined.

In particular, in this 3^{rd} variant of this 3^{rd} embodiment, the dye according to the invention presents the following formula (X): 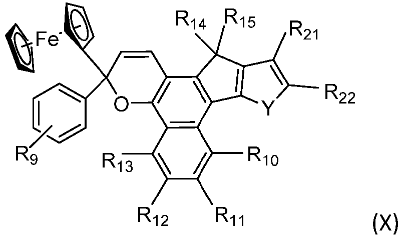
in which Y, the radicals R₉ to R₁₅, R₂₁ and R₂₂ are as previously defined; and
in which at least one element selected in the group consisting of the radical R₉, the radical R₁₀, the radical R₁₁, the radical R₁₂, the radical R₁₃, the radical R₁₄, the radical R₁₅, the radical R₂₁, the radical R₂₂, the radical R₂₃, the radical R₂₄ and the radical R₂₅ is a segment -L-A as previously defined or is substituted by a segment -L-A as previously defined.

Advantageously, in the dyes of formula (IX) or (X) as previously defined, the radicals R₂₁ and R₂₂ are different and selected in the group consisting of a hydrogen, a halogen, a cyano group (-CN), a nitro group (-NO₂), an alkyl group optionally substituted, an aryl group optionally substituted, an alkylaryl group optionally substituted and an arylalkyl group optionally substituted. More advantageously, the radical R₂₁ represents a hydrogen and the radical R₂₂ is a segment -L-A or an aryl group substituted by a segment - L-A. Alternatively, the radical R₂₂ represents a hydrogen and the radical R₂₁ is a segment - L-A, an aryl group substituted by a segment -L-A.

Advantageously, in the dyes of formula (IX) or (X) as previously defined, Y represents CH₂.

Advantageously, in the dyes of formulas (VI) to (X) as previously defined, the radicals R₁₄ and R₁₅ are identical and selected from the group consisting a halogen, a cyano group (-CN), a nitro group (-NO₂), an alkyl group optionally substituted, an aryl group optionally substituted, an alkylaryl group optionally substituted and an arylalkyl group optionally substituted. More advantageously, in the dyes of formulas (VI) to (X) as previously defined, the radicals R₁₄ and R₁₅ are identical and represent an alkylaryl optionally substituted. In particular, in the dyes of formula (VII) or (X) as previously defined, the radicals R₁₄ and R₁₅ represent a group -C₆H₄-C₆H₁₃.

Advantageously, in the dyes of formulas (IV) to (X) as previously defined, the radical R₁₀, the radical R₁₁, the radical R₁₂ and the radical R₁₃ are identical and represent a hydrogen, a halogen, a cyano group (-CN), a nitro group (-NO₂), an alkyl group optionally substituted, an aryl group optionally substituted, an alkylaryl group optionally substituted or an arylalkyl group optionally substituted. More advantageously, in the dyes of formula (IV) to (X) as previously defined, the radical R₁₀, the radical R₁₁, the radical R₁₂ and the radical R₁₃ are identical and represent a hydrogen.

Advantageously, in the dyes of formula (VIII) or (X) as previously defined, the radical R₉ represents a hydrogen.

Advantageously, in the dyes of formulas (III), (V), (VIII) and (X) as previously defined, the radical R₉ is at meta position or at para position in the phenyl group and advantageously at para position in the phenyl group.

"Electron acceptor segment (A)" is taken to mean, within the scope of the present invention, an electron acceptor function which ensures the anchoring of the organic dye according to the present invention on the solid support such as a solid support of metal oxide type while ensuring good transfer of charges between said support and said colorant.

Any electron acceptor segment known to those skilled in the art and commonly used in the field of photosensitizer organic colorants may be used within the scope of the present invention. As examples of such electron acceptor segments may be cited those as defined on page 1, lines 26 and 27 and particularly exemplified on page 29, lines 7 to 23; page 37, lines 6 to 9; from page 46, line 6 to page 47, line 1 or page 47, lines 2 to 8 of international application WO 2009/109499 **[11]** and those implemented in the 56 organic colorants described in Mishra *et al,* 2009 **[12].**

Advantageously, the electron acceptor segment implemented within the scope of the present invention is a carboxylic acid group, a cyanoacrylic acid group, a phosphonic group, a dithiocarboic group or a group corresponding to any of the following formulas:

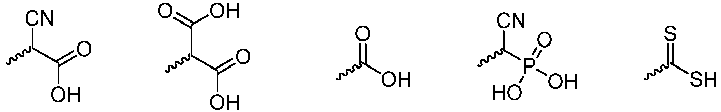

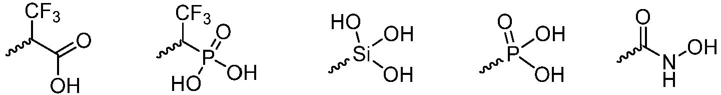

Within the scope of the present invention, the pi-conjugated chromophore and the electron acceptor segment are advantageously separated from each other by a spacer (L).

Any spacer known to those skilled in the art and commonly used in the field of photosensitizer organic colorants may be used within the scope of the present invention. As examples of such spacers, those implemented in the 56 organic colorants described in Mishra *et al,* 2009 **[12]** may be cited.

Within the scope of the present invention, the spacer L is particularly a pi-conjugated function such as an alkenylene or alkynylene chain optionally substituted or an arylene chain optionally substituted.

Within the scope of the present invention, "alkylene chain" is taken to mean a linear, branched or cyclic alkylene chain, comprising from 1 to 40 carbon atoms, particularly from 2 to 30 carbon atoms and which can optionally comprise at least one heteroatom. By way of examples of alkylene chains that may be used, methylene, ethylene, n-propylene, isopropylene, butylene, isobutylene, sec-butylene, tert-butylene, pentylene, isopentylene, hexylene, cyclopentylene, cyclohexylene, -(CH₂)ₙ-O-(CH₂)ₘ-, -(CH₂)ₙ-S-(CH₂)ₘ-, -(CH₂)ₙ-S-S-(CH₂)ₘ-, -(CH₂)ₙ-C(O)O-(CH₂)ₘ-, -(CH₂)ₙ-N(R)-(CH₂)ₘ-, -(CH₂)ₙ-N(R')-(CH₂)ₚ-N(R")-(CH ₂)ₘ- groups may be cited with R representing a hydrocarbon group as defined previously and n, m and p, identical or different, representing a whole number comprised between 0 and 20.

Within the scope of the present invention, "alkenylene or alkynylene chain" is taken to mean a linear, branched or cyclic alkenylene or alkynylene chain, comprising from 4 to 40 carbon atoms and particularly from 4 to 30 carbon atoms and which can optionally comprise at least one heteroatom. As examples of alkenylene or alkynylene chains being able to be used, butenylene or butynylene, isobutenylene or isobutynylene, *sec*-butenylene or sec-butynylene, tert-butenylene or tert-butynylene, pentenylene or pentynylene, isopentenylene or isopentynylene, cyclopentenylene or cyclopentynylene, cyclohexenylene or cyclohexynylene groups may be cited.

Within the scope of the present invention, "arylene chain" is taken to mean an arylene chain with one ring or several rings joined or connected by a single bond or by a hydrocarbon group, each ring having from 4 to 50 carbon atoms and particularly from 4 to 40 carbon atoms and which can comprise optionally at least one heteroatom. As examples of arylene chains which may be used, phenylene, biphenylene, naphthylene, anthracenylene, cyclopentadienylene, pyrenylene, tetrahydronaphthylene, furanylene, pyrrolylene, thiophenylene, selenophenylene, oxazolylene, pyrazolylene, isoquinolinylene, thiazolylene, imidazolylene, triazolylene, pyridinylene, pyranylene, quinolinylene, pyrazinylene and pyrimidinylene groups may be cited.

Within the scope of the present invention, "substituted alkylene chain", "substituted alkenylene or alkynylene chain" or "substituted arylene chain" are taken to mean an alkylene chain, an alkenylene or an alkynylene chain or arylene chain as defined previously having one substitution or several substitutions, identical or different, this or these substitutions corresponding, preferably, to halogen atoms or to aliphatic groups optionally comprising at least one heteroatom such as, for example, a -COOR", -CHO, -OR", -SR", -SCOR", -SO₂R", -NR"R‴, -CONR"R‴, -C(Hal)₃, -OC(Hal)₃, -C(O)Hal or -CN group in which R" and R‴ represent a hydrogen atom or a hydrocarbon group as defined previously, whereas Hal represents a halogen atom, particularly fluorine, chlorine or bromine.

As spacers L which can be more particularly implemented within the scope of the present invention, an ethylenyl, propylenyl, butenyl, phenylene, benzylene, naphthylene or thiophenylene chain may be cited.

In a particularly advantageous manner, the dye according to the present invention is chosen from the following compounds:

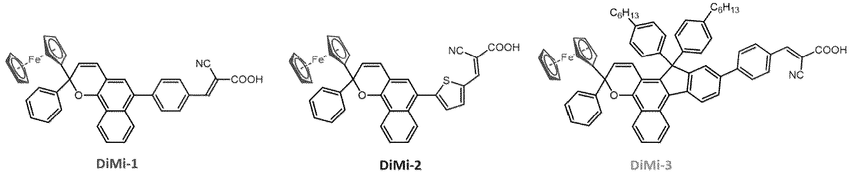

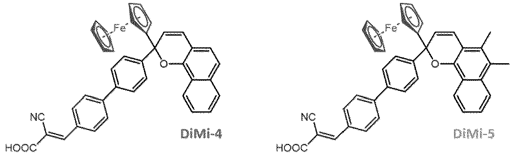

For all of the units and structures described in the present invention, the latter covers all stereo-isomers, all tautomers and all enantiomers that may be envisaged.

The present invention also relates to a method of preparing a dye as defined in the present invention. Said method of preparation implements chemical reactions well known to those skilled in the art. The latter, on the basis of the different protocols explained in the experimental part hereafter and protocols for preparing organic dyes of the prior art, could prepare any dye according to the present invention without any inventive effort.

The present invention concerns a composition containing at least one dye as previously defined. Such a composition is in the form of a solution the solvent of which is an organic solvent advantageously chosen from the group consisting of linear or branched C1 to C4 alcohols, acetone, 2-butanone, N,N-dimethylacetamide, N,N-dimethylformamide, dimethylsulfoxide, 1,4-dioxane, tetrahydrofurane, ethyl acetate, dichloromethane, chloroform, 1,2-dichloroethane, benzene, toluene, diethyl ether, ethylene glycol, propylene glycol, diethylene glycol, dipropylene glycol, acetonitrile and N-methylpyrrolidinone.

The composition according to the present invention may be used to visualize turbulence in fluids and in particular, in complex fluids.

The composition according to the invention may also be used to reduce counterfeit and/or to increase security or authentication of documents and products. Indeed, the invention also concerns a method of marking of products comprising an application step of a composition according to the invention on at least part of a surface of a product or incorporation into the substance of at least part of a product. Therefore the composition according to the invention may be incorporated in a label or an adhesive tape, packaging material, a film of polymer material, an organic or inorganic glue. The compositions according to the invention may be applied by coloring or printing, particularly on paper, cardboard, wood, cellulose or even cotton fibers; they may thus be used in inks or glues.

The present invention also concerns the use of a dye as previously defined in a photochromic coating. In other words, the present invention concerns a photochromic coating comprising at least one organic dye as defined previously.

In a 1^{st} embodiment of this photochromic coating, the dye as defined previously is dispersed in a polymer matrix.

Advantageously, the photochromic coating according to the 1^{st} embodiment can be applied either to an organic surface or an inorganic surface. In particular, such as surface is selected in the group consisting of polymer surfaces, glazing surfaces such as transparent, translucent or reflective glazing surfaces, tissue surfaces and metal surfaces.

Advantageously, this 1^{st} embodiment relates to rigid transparent substrates to which the photochromic coating of the present invention is applied such as glass and organic plastic substrates used for optical applications, for example, in ophthalmic or solar lens; lighting curtains; indoor blinds; window glasses such as building and house glasses; automobile glasses such as automobile side-window glasses and automobile windshield glasses; portholes; airplane windows; and train windows.

Advantageously, the method implemented to apply such a photochromic coating on a surface comprises bar coating, dip coating, spray coating, or inkjet coating.

The one skilled in the art will be able to choose, without any inventive effort, the polymer matrix to be used such as, for example, a polyurethane, a poly(methyl methacrylate) (PMMA), a polycarbonate or an epoxy resin and any other additives to be added to this photochromic coating, depending on the intended application.

Everything previously stated regarding the composition in which the dye according to the invention is in solution in terms of counterfeit reduction and/or of increased security or authentication of documents and products also applies *mutatis mutandis* to the photochromic coating in which the dye according to the invention is dispersed in a polymer matrix.

In a 2^{nd} embodiment of this photochromic coating, the dye as defined previously is grafted i.e. reacts with or is absorbed onto a metal oxide surface.

In this 2^{nd} embodiment, the dye as defined previously reacts with the metal oxide surface via its electron attractor segment to give a group derived from the functionalising dye, i.e. covalently bonded to the metal oxide layer. These functionalising groups thus have a ferrocenyl electron donor segment, a pi-conjugated chromophore, optionally a spacer (L) and a group derived from the electron acceptor segment (A) covalently bonded to the metal oxide layer, the ferrocenyl electron donor segment, the pi-conjugated chromophore, the spacer (L) and the electron acceptor segment (A) being as defined previously.

This 2^{nd} embodiment finds application in the preparation of a photovoltaic device. Indeed and in other words, the present invention relates to a dye as defined previously used as photosensitizer in a photovoltaic device.

Within the scope of the present invention, the expressions "photovoltaic device", "photovoltaic cell", "Dye-Sensitized Solar Cell" and "DSSC" are similar and can be used in an interchangeable manner.

Within the scope of the present invention, "semi-conductor metal oxide" is taken to mean any binary, tertiary or quaternary metal oxide.

In addition, and in particular in the case of photovoltaic device, the semi-conductor metal oxide implemented is a nanostructured semi-conductor metal oxide. Within the scope of the present invention, "nanostructured semi-conductor metal oxide" is taken to mean any semi-conductor metal oxide as defined previously comprising pores and particularly pores in which the average size is comprised between 20 and 500 Å, i.e. any mesoporous semi-conductor metal oxide as defined previously. Thus, the nanostructured semi-conductor metal oxide layer in the form of a mesoporous layer is deposited on the anode of the photovoltaic device.

Within the scope of the present invention, "binary metal oxide" is taken to mean a metal oxide of M^{II}O, M^{III}₂O₃ or M^{V}₂O₅ type with M representing a mono-, bi -, tri-, pentavalent metal and O an oxygen atom. As examples of such binary metal oxides may be cited TiO₂, ZnO, SnO₂, Nb₂O₅, In₂O₃ and RuO₂.

Within the scope of the present invention, "tertiary metal oxide" is taken to mean a metal oxide of MM'O type with M and M' representing two different bivalent metals. As an indication, Zn₂SnO₄, SrTiO₄, SrTiO₃, BaSnO₃ may be cited.

Within the scope of the present invention, "quaternary metal oxide" is taken to mean a composition of mixed oxides. Within the scope of the present invention, "composition of mixed oxides" is taken to mean:
- a mixture of two binary oxides as defined previously. For example, mixtures may be cited such as (ZnO)₁₋ₓ-(SnO₂)ₓ, (TiO₂)₁₋ₓ-(Nb₂O₅)ₓ, or
- a mixture of a binary oxide and a tertiary oxide as defined previously. For example a mixture of (SnO₂)-(SrTiO₃) may be cited.

Consequently, the present invention relates to the photovoltaic device thereby obtained i.e. a photovoltaic device having a nanostructured semi-conductor metal oxide layer sensitized by a dye as defined in the present invention. It should be noted that since the dyes according to the present invention are dyes that can act as sensitizers of wide band gap semiconductors, the photovoltaic cell thus obtained is a semi-transparent solar cell capable to adapt its absorption depending on the light intensity.

Within the scope of the present invention and in particular in the case of photovoltaic device, when the photochromic dye reacts with, i.e. is adsorbed on, the metal oxide layer, said reaction may take place in the presence of an additive such as another colorant or a co-adsorbent.

The other colorant, which can also be adsorbed on the metal oxide layer, may be (a) another panchromatic chromophoric dye according to the present invention, (b) a mixture of dyes according to the present invention, (c) another colorant different from a panchromatic chromophoric dye according to the present invention and (d) a mixture comprising at least one other panchromatic chromophoric dye according to the present invention and at least one other dye different from a panchromatic chromophoric dye according to the present invention.

"Dye different from a panchromatic chromophoric dye according to the present invention" is taken to mean, within the scope of the present invention, a dye chosen from a metal complex dye and/or an organic dye such as a dye of indoline, courmarine, cyanine, merocyanine, hemicyanine, methine, azo, quinone, quinonimine, diceto-pyrrolo-pyrrole, quinacridone, squaraine, triphenylmethane, perylene, indigo, xanthene, eosin, rhodamine, phthalocyanine optionally metallised, porphyrine optionally metallised and mixtures thereof.

As co-adsorbents that can be used within the scope of the present invention may be cited steroid co-adsorbents such as deoxycholic acid, dehydrodeoxycholic acid, chenodeoxycholic acid, cholic acid methyl ester, the sodium salt of cholic acid or a mixture thereof.

Thus, the photovoltaic device according to the present invention comprises two electrodes, designated, within the scope of the invention, an anode and advantageously a mesoporous photoanode on which a dye as previously defined is grafted and a counter electrode, and separated from each other by an electrolyte and optionally polymer shims.

Advantageously, the anode implemented within the scope of the present invention consists of a layer of tin dioxide doped with fluorine (SnO₂:F or FTO) or indium tin oxide (ITO) deposited on a glass plate and on which a dye as previously defined is grafted.

Within the scope of the photovoltaic device according to the present invention, the electrolyte may be a liquid, an ionic liquid, a gel or a solid. Such an electrolyte is particularly as disclosed in the book of Kalyanasundaram, 2010 [13].

When the electrolyte is a liquid electrolyte, it is advantageously chosen from customary liquid electrolytes such as I /I₃⁻, Br⁻/Br₂, SCN⁻/(SCN)₂ or cobalt complexes of Co(III/II) type. As examples of solvents usable for liquid electrolyte, one can cite acetonitrile, propionitrile, butyronitrile, valeronitrile and mixtures thereof.

When the electrolyte is an electrolyte of gel or ionic liquid type, it is advantageously chosen from imidazolium salts such as, by way of examples and in a non-exhaustive manner, 1-ethyl-3-methylimidazolium selenocyanate (EMISeCN), 1-ethyl-3-methylimidazolium thiocyanate (EMISCN) or 1-methyl-3-n-hexylimidazolium iodide (MHlml).

When the electrolyte is a solid type electrolyte, it is advantageously chosen from a p-type semi-conductor solid, such as a polymer or a small molecule, being able to be deposited by liquid process. More particularly, the electrolyte of solid type capable of being implemented within the scope of the present invention is chosen from the compound spiro-OMeTAD or a derivative of triarylamine. A pi-conjugated polymer may also be used such as, for example, poly(3,4-ethylenedioxythiophene) (PEDOT) or a mixture of PEDOT and sodium poly(styrene sulphonate) (PSS) known as PEDOT:PSS. A polymer of poly(ethylene) oxide type containing a redox couple or even polyaniline may also be used.

Whatever the type of electrolyte implemented within the scope of the present invention, the latter moreover comprises a redox couple such as the redox couple I⁻/I³⁻ or a cobalt complex and optionally an anion of bis(trifluoro-methanesulphonyl)imide (TFSI) type such as Li-TFSI and does so to improve the conductivity of the electrolyte.

Within the scope of the present invention, "polymer shim" is taken to mean a thermal polymer adhesive making it possible to set the two electrodes. Such polymer adhesives are particularly the adhesives of Solaronix brand such as those of the Amosil or even Meltonix range or even the adhesives of the FastelFilm range of DuPont These polymers come in the form of thick hot melt thermoplastic sheets. The sealing occurs when the polymer is heated to around 100°C for several seconds, for example, using a vacuum laminator, a hot press or a soldering iron for small surfaces. Typically, the seals or the strips are cut and laid out on the electrode substrate before hot lamination.

Finally, the counter electrode of the photovoltaic device according to the present invention is constituted of a metal layer such as a platinum layer or of an organic conductive layer such as a conductive polymer layer deposited on a transparent solid FTO support according to an operating method well known to those skilled in the art.

In particular, the dyes of the present invention particularly useful in this 2^{nd} embodiment as previously defined and in particular in photovoltaic device regarding their performances are DiMi-1, DiMi-2 and DiMi-3.

Other characteristics and advantages of the present invention will become clearer to those skilled in the art on reading the examples below given for illustrative and nonlimiting purposes, and by referring to the appended drawings.

### BRIEF DESCRIPTION OF THE DRAWINGS

Figure 1 shows the UV-Visible absorption spectra of the dyes according to the invention (2×10⁻⁵M in toluene, 25°C) before irradiation (black curves) and after reaching the PSS with continuous irradiation with a polychromatic lamp (colored curves) and structure of the dyes in the closed form.
Figure 2 shows the discoloration curves of the dyes according to the invention in solution (2×10⁻⁵M in Toluene, 25°C) in the dark after the PSS was reached under irradiation with polychromatic light. For each dye, a wavelength representative of the difference between the OF and CF was monitored (611 nm for DiMi-1, 649 nm for DiMi-2, 654 nm for DiMi-3, 475 nm for DiMi-4 and 470 nm for DiMi-5). An exponential regression was applied to the absorption data over time, using either a single or double exponential fit (A(t)=A₁e^{-k1}+A₂e^{-k2} ) and the fitting data is reported in the figure.
Figure 3 shows the theoretical and experimental HOMO and LUMO energy levels of the open form of each dye according to the invention. The experimental HOMO is calculated through cyclic voltammetry (2×10⁻3 M in DCM/TBAPF₆ 0.1 M), the experimental LUMO by determination of band-gap energy through absorption spectroscopy (2×10⁻³ M in toluene) and addition to HOMO energy. The positions of the conduction band of TiO₂ and the reduction potential of the iodine-based redox couple are indicated with horizontal dashed lines.
Figure 4 shows a polymeric matrix based on PMMA and containing DiMi-5, before irradiation, using a mask and after deactivation in the dark, at 30°C, overnight or after 2h.
Figure 5 shows the UV-Visible absorption spectra of the PMMA/DiMi-5 matrix before irradiation (LS light soaking), after irradiation and after deactivation in the dark overnight.
Figure 6 shows TiO₂ electrodes grafted with the dyes according to the invention (dyeing bath solution: 0.05 M dye, 0.5 M CDCA in 1:1 CHCl₃:t-BuOH). 1) Before irradiation, 2) after irradiation and 3) after five days in the dark.

### DETAILED DISCUSSION OF PARTICULAR EMBODIMENTS

### I. Synthesis of the compounds

### I.1. Nuclear magnetic resonance (NMR)

NMR spectra were recorded on Bruker AC 400 MHz spectrometer. The deuterated solvents used were chloroform-d (1H, δ: 7.26, 13C, δ : 77.16), acetone-*d₆* (1H δ : 2.05, 13C, δ : 29.84) and tetrahydrofuran-ds (1H, δ : 3.58, 13C, δ : 67.21). The follow abbreviations were used: s for singlet, d for doublet, t for triplet, m for multiplet and br for broaden signals.

All synthesis intermediates and final products were characterized by ¹H and ¹³C NMR to confirm their structures.

### I.2. Synthesis of ((E)-2-cyano-3-(4-(2-ferrocenyl-2-phenyl-2H-benzo[h] chromen-6-yl)phenyl)acrylic acid) (DiMi-1)

### A. 1-ferrocenyl-1-phenylprop-2-ynol (DM65)

The synthesis of 1-ferrocenyl-1-phenylprop-2-ynol is already reported by Anguille *et al,* 2001 **[2].**

### B. 4-(4-hydroxynaphthalen-1-yl)benzaldehyde (DM84)

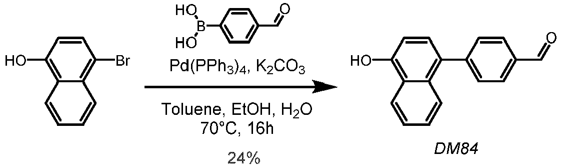

Under argon, 4-Bromo-1-naphthol (399.27 mg, 1.79 mmol), 4-Formylphenylboronic acid (324.18 mg, 2.16 mmol) and potassium carbonate (K₂CO₃, 751.32 mg, 5.44 mmol) were dissolved in a mixture of toluene (6 mL), ethanol (6 mL) and water (5 mL). Tetrakis(triphenylphosphine)palladium(0) (Pd(PPh₃)₄, 119.05 mg, 0.10 mmol) was added. The reaction mixture was stirred at 70°C for 16 h. The reaction mixture was cooled to room temperature and concentrated under vacuum. The organic phase was extracted with ethyl acetate, dried on sodium sulphate and concentrated. Purification on silica gel using n-hexane/dichloromethane (DCM) (100:0 to 0:100) as eluent to give a pale brown solid (105.12 mg, 0.42 mmol, 24%)
¹H NMR (Acetone-D6, 400 MHz) : δ 10.00 (s, 1H, CHO), 9.21 (br s, 1H, OH), 8.30 - 8.17 (m, 1H, Hₐᵣ), 7.92 (d, 2H, Hₐᵣ), 7.74 - 7.66 (m, 1H, Hₐᵣ), 7.56 (d, *J* = 8.1 Hz, 2H, Hₐᵣ), 7.45 - 7.31 (m, 2H, Hₐᵣ), 7.20 (d, *J* = 7.8 Hz, 1H, Hₐᵣ), 6.90 (d, *J* = 7.8 Hz, 1H, Hₐᵣ).

¹³C NMR (Acetone-D6, 100 MHz) : δ 192.31, 154.10, 147.90, 135.90, 132.77, 131.35, 130.74, 130.05, 128.28, 127.32, 125.71, 125.50, 125.40, 123.18, 108.30.

### C. 4-(2-ferrocenyl-2-phenyl-2H-benzo[h]chromen-6-yl)benzaldehyde (DM86)

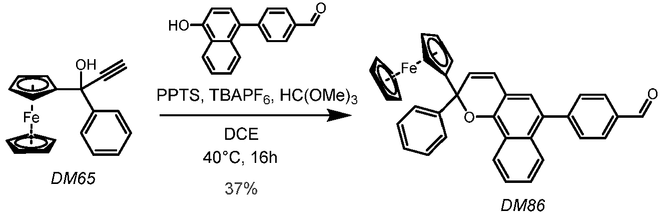

Under argon, 1-ferrocenyl-1-phenylprop-2-ynol (132.43 mg, 0.42 mmol), DM84 (95.01 mg, 0.38 mmol), pyridinium p-toluenesulfonate (PPTS, 11.22 mg, 0.04 mmol) and Tetrabutylammonium hexafluorophosphate (TBAPF₆, 15.06 mg, 0.04 mmol) were dissolved in anhydrous 1,2-dichloroethane (20 mL). Trimethyl orthoformate (0.15 mL, 1.37 mmol) was added. The reaction mixture was stirred at 40°C for 16 h. The reaction mixture was cooled to room temperature, water was added and the organic phase was extracted with DCM, dried on sodium sulphate and concentrated. Purification on silica gel using n-hexane/DCM (100:0 to 70:30) as eluent to give a dark grey solid (77.89 mg, 0.14 mmol, 37%).

¹H NMR (Acetone-D6, 400 MHz) : δ 10.01 (s, 1H, CHO), 8.46 (d, *J* = 8.4 Hz, 1H, Hₐᵣ), 7.93 (d, *J* = 8.3 Hz, 2H, Hₐᵣ), 7.68 (d, *J* = 8.5 Hz, 1H, Hₐᵣ), 7.58 (d, *J* = 8.1 Hz, 2H, Hₐᵣ), 7.55 - 7.46 (m, 3H, Hₐᵣ), 7.42 - 7.35 (m, 1H, Hₐᵣ), 7.19 (s, 1H, Hₐᵣ), 7.14 (dd, *J* = 10.3, 4.8 Hz, 2H, Hₐᵣ), 7.06 (dd, *J* = 4.9, 3.7 Hz, 1H, Hₐᵣ), 6.74 (d, *J* = 9.9 Hz, 1H, H_{pyran}), 6.55 (d, *J* = 9.8 Hz, 1H, H_{pyran}), 4.49 - 4.45 (m, 1H, H_{Fc}), 4.26 - 4.22 (m, 1H, H_{Fc}), 4.18 - 4.14 (m, 1H, H_{Fc}), 4.14 - 4.10 (m, 1H, H_{Fc}), 4.00 (s, 5H, H_{Fc}).

¹³C NMR (Acetone-D6, 100 MHz) : δ 192.38, 148.90, 147.33, 146.97, 136.19, 132.68, 132.02, 131.44, 130.12, 128.50, 128.38, 127.91, 127.58, 126.62, 126.55, 126.07, 126.03, 125.38, 122.80, 122.54, 115.99, 95.89, 69.53, 68.62, 68.57, 67.06, 66.21.

### D. (E)-2-cyano-3-(4-(2-ferrocenyl-2-phenyl-2H-benzo[h]chromen-6-yl)phenyl)acrylic acid (DiMi-1)

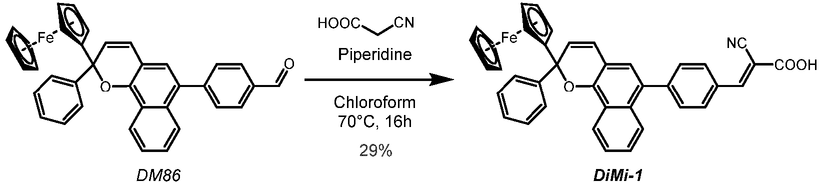

Under argon, DM86 (109.10 mg, 0.20 mmol) and cyanoacetic acid (33.28 mg, 0.39 mmol) were dissolved in anhydrous chloroform (35 mL). Some drops of piperidine were added. The reaction mixture was stirred at 70°C for 16 h. The reaction mixture was cooled to room temperature, water was added and the organic phase was extracted with DCM, washed with HCI 1M (aq.), washed with water, dried on sodium sulphate and concentrated. Purification on silica gel using DCM/methanol (100:0 to 90:10) as eluent to give a dark grey solid (35.00 mg, 0.06 mmol, 29%).

¹H NMR (THF-D8, 400 MHz) : δ 8.38 (d, *J* = 8.3 Hz, 1H, Hₐᵣ), 8.26 (s, 1H, H_{β to COOH}), 7.98 (s, 2H, Hₐᵣ), 7.70 (d, *J* = 8.0 Hz, 1H, Hₐᵣ), 7.56 - 7.34 (m, 5H, Hₐᵣ), 7.28 (s, 1H, Hₐᵣ), 7.13 - 7.03 (m, 3H, Hₐᵣ), 7.00 (t, *J* = 7.1 Hz, 1H, Hₐᵣ), 6.59 (d, *J* = 9.5 Hz, 1H, H_{pyran}), 6.36 (d, *J* = 9.6 Hz, 1H, H_{pyran}), 4.41 (s, 1H, H_{Fc}), 4.14 (s, 1H, H_{Fc}), 4.12 (s, 1H, H_{Fc}), 4.09 (s, 1H, H_{Fc}), 3.96 (s, 5H, H_{Fc}), 2.58 (s, 1H, COOH).

¹³C NMR (THF-D8, 100 MHz) : δ 148.99, 147.03, 133.00, 132.19, 131.36, 128.36, 128.06, 127.74, 127.31, 126.55, 126.29, 126.18, 125.50, 122.78, 122.47, 115.74, 96.13, 82.03, 69.55, 68.53, 68.45, 67.78, 66.43.

### I.3. Synthesis of ((E)-2-cyano-3-(5-(2-ferrocenyl-2-phenyl-2H-benzo[h]chromen-6-yl)thiophen-2-yl)acrylic acid) (DiMi-2)

### A. 5-(4-hydroxynaphthalen-1-yl)thiophene-2-carbaldehyde (DM85)

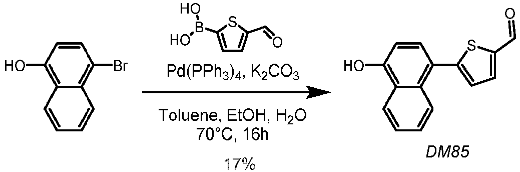

Under argon, 4-Bromo-1-naphthol (401.46 mg, 1.80 mmol), 5-Formyl-2-thienylboronic acid (338.41 mg, 2.17 mmol) and K₂CO₃ (752.71 mg, 5.45 mmol) were dissolved in a mixture of toluene (6 mL), ethanol (6 mL) and water (5 mL). Pd(PPh₃)₄ (118.67 mg, 0.10 mmol) was added. The reaction mixture was stirred at 70°C for 16 h. The reaction mixture was cooled to room temperature and concentrated under vacuum. The organic phase was extracted with ethyl acetate, dried on sodium sulphate and concentrated. Purification on silica gel using n-hexane/DCM (100:0 to 0:100) as eluent to give a pale brown solid (78.50 mg, 0.31 mmol, 17%).

¹H NMR (Acetone-D6, 400 MHz) : δ 9.86 (s, 1H, CHO), 9.48 (br s, 1H, OH), 8.24 (dd, 1H, Hₐᵣ), 8.02 (dd^{,} *J* = 7.5, 1.6 Hz, 1H, Hₐᵣ), 7.90 (d, *J* = 3.8 Hz, 1H, Hₐᵣ), 7.49 - 7.40 (m, 2H, Hₐᵣ), 7.38 (d, *J* = 7.9 Hz, 1H, Hₐᵣ), 7.28 (d, *J* = 3.8 Hz, 1H, Hₐᵣ), 6.90 (d, *J* = 7.9 Hz, 1H, Hₐᵣ)^{.}

¹³C NMR (Acetone-D6, 100 MHz) : δ 183.47, 155.22, 152.73, 143.67, 138.03, 132.83, 129.73, 128.90, 127.98, 125.77, 125.70, 125.16, 123.26, 122.76, 108.24.

### B. 5-(2-ferrocenyl-2-phenyl-2H-benzo[h]chromen-6-yl)thiophene-2-carbaldehyde (DM87)

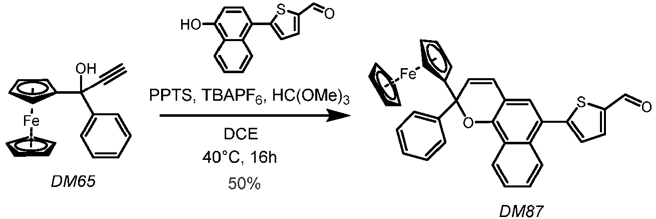

Under argon, 1-ferrocenyl-1-phenylprop-2-ynol (95.79 mg, 0.30 mmol), DM85 (73.20 mg, 0.29 mmol), PPTS (9.52 mg, 0.04 mmol) and TBAPF₆ (11.31 mg, 0.03 mmol) were dissolved in anhydrous 1,2-dichloroethane (20 mL). Trimethyl orthoformate (0.15 mL, 1.37 mmol) was added. The reaction mixture was stirred at 40°C for 16 h. The reaction mixture was cooled to room temperature, water was added and the organic phase was extracted with DCM, dried on sodium sulphate and concentrated. Purification on silica gel using n-hexane/DCM (100:0 to 70:30) as eluent to give a dark brown solid (80.00 mg, 0.14 mmol, 50%).

¹H NMR (Acetone-D6, 400 MHz) : δ 9.86 (s, 1H, CHO), 8.47 - 8.42 (m, 1H, Hₐᵣ), 7.99 (d, *J* = 8.4 Hz, 1H, Hₐᵣ), 7.91 (d, *J* = 3.8 Hz, 1H, Hₐᵣ), 7.57 - 7.51 (m, 1H, Hₐᵣ), 7.51 - 7.44 (m, 3H, Hₐᵣ), 7.37 (s, 1H, Hₐᵣ), 7.31 (d, *J* = 3.8 Hz, 1H, Hₐᵣ), 7.13 (dd, *J* = 10.4, 4.8 Hz, 2H, Hₐᵣ), 7.07 -7.00 (m, 1H, Hₐᵣ), 6.75 (d, *J* = 9.9 Hz, 1H, H_{pyran}), 6.55 (d, *J* = 9.9 Hz, 1H, H_{pyran}), 4.48 - 4.43 (m, 1H, H_{Fc}), 4.25 - 4.22 (m, 1H, H_{Fc}), 4.17 - 4.13 (m, 1H, H_{Fc}), 4.13 - 4.09 (m, 1H, H_{Fc}), 3.98 (s, 5H, H_{Fc}).

¹³C NMR (Acetone-D6, 100 MHz) : δ 183.57, 151.87, 149.82, 146.69, 144.01, 138.01, 132.65, 129.35, 128.47, 128.17, 127.93, 127.77, 126.94, 125.97, 125.66, 125.34, 124.04, 122.84, 122.10, 115.88, 95.59, 82.12, 69.48, 68.63, 68.56, 67.02, 66.12.

### C. (E)-2-cyano-3-(5-(2-ferrocenyl-2-phenyl-2H-benzo[h]chromen-6-yl)thiophen-2-yl)acrylic acid (DiMi-2)

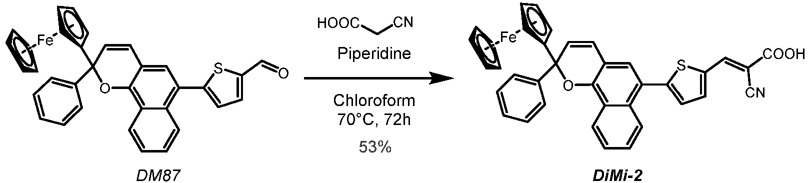

Under argon, DM87 (105.40 mg, 0.19 mmol) and cyanoacetic acid (32.37 mg, 0.38 mmol) were dissolved in anhydrous chloroform (35 mL). Some drops of piperidine were added. The reaction mixture was stirred at 70°C for 16 h. The reaction mixture was cooled to room temperature, water was added and the organic phase was extracted with DCM, washed with HCI 1M (aq.), washed with water, dried on sodium sulphate and concentrated. Purification on silica gel using DCM/methanol (100:0 to 90:10) as eluent to give a dark grey solid (62.70 mg, 0.10 mmol, 53%).

¹H NMR (THF-D8, 400 MHz) : δ 8.40 (d, *J* = 8.1 Hz, 1H, Hₐᵣ), 8.30 (s, 1H, H_{β to COOH}), 8.02 (d, *J* = 8.3 Hz, 1H, Hₐᵣ), 7.81 (s, 1H, Hₐᵣ), 7.50 - 7.32 (m, 5H, Hₐᵣ), 7.27 (s, 1H, Hₐᵣ), 7.08 (t, *J* = 7.5 Hz, 2H, Hₐᵣ), 7.00 (t, *J* = 7.3 Hz, 1H, Hₐᵣ), 6.67 (d, *J* = 9.8 Hz, 1H, H_{pyran}), 6.40 (d, *J =* 9.8 Hz, 1H, H_{pyran}), 4.42 (s, 1H, H_{Fc}), 4.15 (s, 1H, H_{Fc}), 4.13 (s, 1H, H_{Fc}), 4.10 (s, 1H, H_{Fc}), 3.97 (s, 5H, H_{Fc}), 2.58 (br s, 1H, COOH).

¹³C NMR (THF-D8, 100 MHz) : δ 150.10, 146.81, 133.01, 129.12, 128.41, 128.24, 127.98, 127.84, 126.69, 126.16, 125.87, 125.58, 124.11, 122.94, 122.09, 115.79, 95.85, 82.44, 69.57, 68.62, 68.51, 67.78, 67.21, 66.41.

### I.4. Synthesis of ((E)-2-cyano-3-(4-(3-fluoro-13,13-bis(4-hexylphenyl)-3-phenyl-3,13-dihydrobenzo[h]indeno[2,1-f]chromen-11-yl)phenyl)acrylic acid) (DiMi-3)

### A. 9-bromo-7,7-bis(4-hexylphenyl)-5-methoxy-7H-benzo[c]fluorene (DM37)

The synthesis of 9-bromo-7,7-bis(4-hexylphenyl)-5-methoxy-7H-benzo[c]fluorene is already reported by Mwalukuku *et al,* 2023 **[14].**

### B. 9-bromo-7,7-bis(4-hexylphenyl)-7H-benzo[c]fluoren-5-ol (DM97)

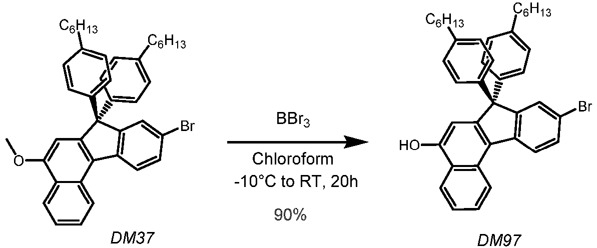

Under argon, 9-bromo-7,7-bis(4-hexylphenyl)-5-methoxy-7H-benzo[c]fluorine (380.29 mg, 0.59 mmol) is dissolved in anhydrous chloroform (10 mL). The solution is brought to -10°C. Boron tribromide (BBr₃, 4.3 mL, 4.3 mmol, from 1M solution in DCM) is added dropwise. The reaction mixture was stirred at room temperature for 20 h. A saturated NaHCO₃ aqueous solution was added to the reaction mixture and the organic phase was extracted with DCM, washed with water, dried on sodium sulphate and concentrated. Purification on silica gel using n-hexane/DCM (100:0 to 80:20) as eluent to give an orange solid (335.20 mg, 0.53 mmol, 90%).

¹H NMR (Acetone-D6, 400 MHz) : δ 9.22 (s, 1H, OH), 8.61 (d, J = 8.5 Hz, 1H, Hₐᵣ), 8.23 (d, J = 8.1 Hz, 1H, Hₐᵣ), 8.16 (d, J = 8.3 Hz, 1H, Hₐᵣ), 7.65 - 7.53 (m, 1H, Hₐᵣ), 7.49 - 7.37 (m, 3H, Hₐᵣ), 7.04 - 6.92 (m, 8H, Hₐᵣ), 6.84 (s, 1H, Hₐᵣ), 2.48 - 2.38 (m, 4H, -CH₂-), 1.44 (dt, J = 15.4, 7.6 Hz, 4H, -CH₂-), 1.25 - 1.07 (m, 12H, -CH₂-), 0.72 (t, J = 6.9 Hz, 6H, -CH₃).

¹³C NMR (Acetone-D6, 100 MHz) : δ 155.41, 154.71, 152.39, 142.69, 142.14, 141.42, 131.02, 130.85, 129.24, 128.92, 128.61, 128.33, 125.66, 125.30, 124.20, 124.06, 123.91, 119.01, 106.75, 65.57, 35.74, 32.08, 31.91, 22.91, 14.00.

### B. 11-bromo-3-ferrocenyl-13,13-bis(4-hexylphenyl)-3-phenyl-3,13-dihydrobenzo[h]indeno[2,1-f]chromene (DM98)

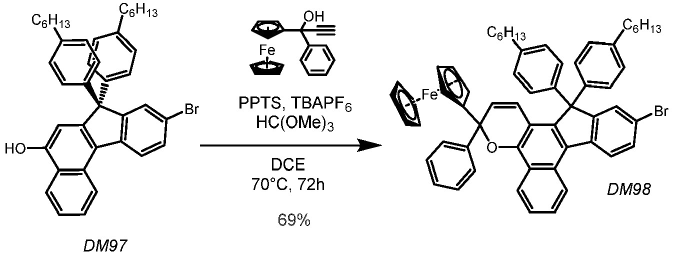

Under argon, *1-ferrocenyl-1-phenylprop-2-ynol* (361.2 mg, 1.14 mmol), DM97 (316.5 mg, 0.50 mmol), PPTS (13.9 mg, 0.06 mmol) and TBAPF₆ (19.3 mg, 0.05 mmol) were dissolved in anhydrous 1,2-dichloroethane (15 mL). Trimethyl orthoformate (0.2 mL, 1.83 mmol) was added. The reaction mixture was stirred at 50°C for 72 h. The reaction mixture was cooled to room temperature, water was added and the organic phase was extracted with DCM, dried on sodium sulfate and concentrated. Purification on silica gel using n-hexane/DCM (100:0 to 70:30) as eluent to give a black solid (320.0 mg, 0.34 mmol, 69%).

¹H NMR (CDCl₃, 400 MHz) : δ 8.61 (d, *J* = 8.5 Hz, 1H, Hₐᵣ), 8.45 (d, *J* = 7.7 Hz, 1H, Hₐᵣ), 8.05 (d, *J* = 8.4 Hz, 1H, Hₐᵣ), 7.66 - 7.60 (m, 1H, Hₐᵣ), 7.58 - 7.51 (m, 1H, Hₐᵣ), 7.49 (d, *J* = 1.8 Hz, 1H, Hₐᵣ), 7.44 (dd, *J* = 8.3, 1.8 Hz, 1H, Hₐᵣ), 7.37 - 7.31 (m, 2H, Hₐᵣ), 7.24 (d, *J = 8.4* Hz, 2H, Hₐᵣ), 7.16 - 7.09 (m, 5H, Hₐᵣ), 7.06 (d, *J* = 8.3 Hz, 2H, Hₐᵣ), 7.00 (d, *J* = 8.3 Hz, 2H, Hₐᵣ), 6.62 (d, *J =* 10.1 Hz, 1H, H_{pyran}), 6.03 (d, *J =* 10.1 Hz, 1H, H_{pyran}), 4.38 - 4.34 (m, 1H, H_{Fc}), 4.18 - 4.15 (m, 1H, H_{Fc}), 4.14 - 4.10 (m, 1H, H_{Fc}), 3.98 - 3.91 (m, 6H, H_{Fc}), 2.60 - 2.51 (m, 4H, - CH₂-), 1.59 (dt, J = 14.0, 7.1 Hz, 4H, -CH₂-), 1.40 - 1.21 (m, 12H, -CH₂-), 0.94 - 0.81 (m, 6H, - CH₃).

¹³C NMR (CDCl₃, 100 MHz) : δ 157.15, 149.34, 147.27, 144.51, 141.61, 141.46, 140.03, 138.99, 138.50, 130.21, 129.90, 128.87, 128.81, 128.30, 128.10, 127.67, 127.36, 126.59, 126.06, 125.91, 125.24, 123.78, 123.28, 122.93, 120.48, 119.51, 113.76, 93.99, 80.40, 68.95, 68.04, 67.98, 66.59, 66.12, 64.70, 35.54, 31.73, 31.32, 31.29, 29.17, 22.61, 14.10.

### C. 4-(3-ferrocenyl-13,13-bis(4-hexylphenyl)-3-phenyl-3,13-dihydrobenzo[h]indeno[2,1-f]chromen-11-yl)benzaldehyde (DM101)

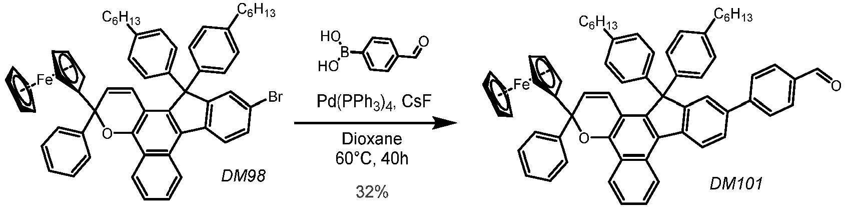

Under argon, DM98 (362.1 mg, 0.38 mmol), 4-Formylphenylboronic acid (116.7 mg, 0.78 mmol) and caesium fluoride (CsF, 147.5 mg, 0.97 mmol) were dissolved in dioxane (15 mL). Pd(PPh₃)₄ (49.7 mg, 0.04 mmol) was added. The reaction mixture was stirred at 60°C for 40 h. The reaction mixture was cooled to room temperature. The organic phase was extracted with ethyl acetate, dried on sodium sulphate and concentrated. Purification on silica gel using n-hexane/Ethyl acetate (AcOEt) (100:0 to 90:10) as eluent to give a dark green solid (114.5 mg, 0.12 mmol, 32%).

¹H NMR (CDCl₃, 400 MHz) : δ 10.01 (s, 1H, CHO), 8.73 (d, *J* = 8.5 Hz, 1H, Hₐᵣ), 8.47 (d, *J* = 7.7 Hz, 1H, Hₐᵣ), 8.29 (d, *J* = 8.1 Hz, 1H, Hₐᵣ), 7.89 (d, *J* = 8.3 Hz, 2H, Hₐᵣ), 7.69 (d, *J* = 8.2 Hz, 2H, Hₐᵣ), 7.66 - 7.60 (m, 3H, Hₐᵣ), 7.57 (t, *J* = 7.4 Hz, 1H, Hₐᵣ), 7.36 (dd, *J* = 7.7, 1.8 Hz, 2H, Hₐᵣ), 7.31 (d, *J* = 8.3 Hz, 2H, Hₐᵣ), 7.22 (d, *J* = 8.3 Hz, 2H, Hₐᵣ), 7.17 - 7.10 (m, 3H, Hₐᵣ), 7.06 (d, *J* = 8.3 Hz, 2H, Hₐᵣ), 7.01 (d, *J* = 8.3 Hz, 2H, Hₐᵣ), 6.67 (d, *J =* 10.1 Hz, 1H, H_{pyran}), 6.05 (d, *J =* 10.1 Hz, 1H, H_{pyran}), 4.41 - 4.34 (m, 1H, H_{Fc}), 4.20 - 4.15 (m, 1H, H_{Fc}), 4.16 - 4.11 (m, 1H, H_{Fc}), 3.96 (m, 1H, H_{Fc}), 3.95 (s, 5H, H_{Fc}), 2.55 (m, 4H, -CH₂-), 1.57 (m, 4H, -CH₂-), 1.38 - 1.22 (m, 12H, -CH₂-), 0.92 - 0.80 (m, 6H, -CH₃).

¹³C NMR (CDCl₃, 100 MHz) : δ 191.89, 156.13, 149.43, 147.98, 147.25, 144.57, 141.61, 141.51, 141.36, 139.50, 139.02, 136.93, 134.87, 130.18, 130.12, 128.92, 128.88, 128.27, 128.07, 127.69, 127.49, 127.40, 127.36, 126.98, 126.56, 126.08, 125.87, 125.26, 123.98, 123.89, 123.30, 122.15, 120.55, 113.89, 94.03, 80.44, 68.96, 68.05, 67.99, 66.60, 66.12, 35.53, 31.71, 31.32, 31.28, 29.17, 22.60, 14.09.

### D. (E)-2-cyano-3-(4-(3-fluoro-13,13-bis(4-hexylphenyl)-3-phenyl-3,13-dihydrobenzo[h]indeno[2,1-f]chromen-11-yl)phenyl)acrylic acid (DiMi-3)

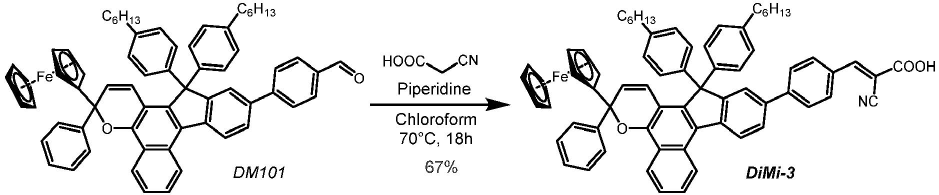

Under argon, DM101 (106.5 mg, 0.11 mmol) and cyanoacetic acid (19.1 mg, 0.22 mmol) were dissolved in anhydrous chloroform (35 mL). Some drops of piperidine were added. The reaction mixture was stirred at 70°C for 18 h. The reaction mixture was cooled to room temperature, water was added and the organic phase was extracted with DCM, washed with HCI 1M (aq.), washed with water, dried on sodium sulphate and concentrated. Purification on silica gel using DCM/methanol (100:0 to 90:10) as eluent to give a dark green solid (76.5 mg, 0.07 mmol, 67%).

¹H NMR (THF-D8, 400 MHz) : δ 8.61 (br s, 1H, Hₐᵣ), 8.34 (d, *J* = 9.3 Hz, 1H, Hₐᵣ), 8.05 (br m, 2H, Hₐᵣ, H_{β to COOH}), 7.84 (s, 2H, Hₐᵣ), 7.67 (s, 1H, Hₐᵣ), 7.48 (m, 5H, Hₐᵣ), 7.29 (d, *J* = 7.2 Hz, 2H, Hₐᵣ), 7.24 (d, *J* = 8.2 Hz, 2H, Hₐᵣ), 7.17 (d, *J* = 8.2 Hz, 2H, Hₐᵣ), 6.97 (m, 7H, Hₐᵣ), 6.62 (d, *J* = 10.1 Hz, 1H, H_{pyran}), 6.08 (d, *J =* 10.1 Hz, 1H, H_{pyran}), 4.33 - 4.23 (m, 1H, H_{Fc}), 4.05 (m, 1H, H_{Fc}), 4.01 (m, 1H, H_{Fc}), 3.92 - 3.80 (m, 6H, H_{Fc}), 2.56 (br s, 1H, COOH), 2.44 (dd, J = 15.2, 7.1 Hz, 4H, -CH₂-), 1.54 - 1.36 (m, 4H, -CH₂-), 1.32 - 1.05 (m, 12H, -CH₂-), 0.88 - 0.64 (m, 6H, -CH₃).

¹³C NMR (THF-D8, 100 MHz) : 155.80, 148.89, 147.33, 144.23, 140.84, 140.68, 139.51, 138.99, 136.52, 130.48, 129.73, 128.62, 128.51, 127.62, 127.43, 126.96, 126.77, 126.74, 126.65, 126.47, 125.70, 125.66, 124.94, 124.61, 123.60, 122.96, 122.52, 121.66, 120.06, 113.67, 93.55, 80.05, 68.35, 67.35, 66.61, 66.40, 66.18, 64.48, 35.03, 31.31, 31.29, 31.13, 31.06, 28.78, 22.11, 13.06.

### I.5. Synthesis of ((E)-2-cyano-3-(4'-(2-ferrocenyl-2H-benzo[h]chromen-2-yl)-[1,1'-biphenyl]-4-yl)acrylic acid) (DiMi-4)

### A. Ferrocenyl-(4-bromo-phenyl) ketone (DM103)

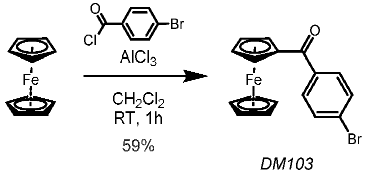

Under argon, ferrocene (8.48 g, 45.57 mmol) was dissolved in anhydrous 1,2-dichloroethane (120 mL). 4-Bromobenzoyl chloride (10.06 g, 45.84 mmol) and AlCl₃ (6.70 g, 50.25 mmol) were dissolved in anhydrous 1,2-dichloroethane (60 mL). The obtained solution was added to the ferrocene solution. The mixture was stirred at RT for 1 hour. The reaction mixture was poured onto ice and water. The organic phase is extracted with DCM, washed with water till neutral pH, dried on sodium sulphate and concentrated. The resulting product is recrystallized in n-hexane to give a red solid (9.98 g, 27.04 mmol, 59 %).

¹H NMR (CDCl₃, 400 MHz) : δ 7.78 (d, J = 8.3 Hz, 2H, Hₐᵣ), 7.61 (d, J = 8.3 Hz, 2H, Hₐᵣ), 4.87 (s, 2H, H_{Fc}), 4.61 (s, 2H, H_{Fc}), 4.20 (s, 5H, H_{Fc}).

¹³C NMR (CDCl₃, 100 MHz) : δ 198.00, 138.51, 131.54, 129.71, 126.30, 72.83, 71.48, 70.32.

### B. 1-ferrocenyl-1-(4-bromo-phenyl)prop-2-ynol (DM105)

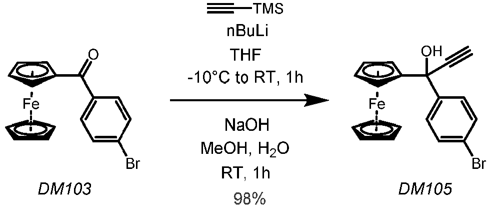

Under argon, Trimethylsilylacetylene (9.4 mL, 67.85 mmol) was dissolved in anhydrous tetrahydrofuran (THF, 150 mL) and the mixture was brought to -10°C. n-Butyllithium (nBuLi, 19.6 mL, 49.00 mmol, from a 2.5 M solution in n-hexane) was added dropwise and the solution was stirred for 30 min$ at -10°C. DM103 (9.97 g, 27.02 mmol) was dissolved in anhydrous THF (75 mL) and then was added to the solution at -10°C. The mixture was allowed to reach room temperature and was stirred for one hour. A saturated NaHCO₃ aqueous solution was added to the reaction mixture and the organic phase was extracted with AcOEt, washed with water, dried on sodium sulphate and concentrated. The resulting crude was dissolved in methanol (MeOH) (300 mL) and water (15 mL). NaOH (20 g) was added to the solution and the mixture was stirred for 1 h. The solution was concentrated under vacuum to remove MeOH and the organic phase was extracted with AcOEt, washed with water, dried on sodium sulphate and concentrated. Purification on silica gel using n-hexane/DCM (100:0 to 15:85) as eluent to give an orange solid (10.51 g, 26.60 mmol, 98%).

¹H NMR (Acetone-D6, 400 MHz) : δ 7.48 - 7.43 (m, 2H, Hₐᵣ), 7.37 - 7.32 (m, 2H, Hₐᵣ), 4.87 (s, 1H, OH), 4.18 (m,z 1H, H_{Fc}), 4.15 (m, 5H, H_{Fc}), 4.10 (m, 1H, H_{Fc}), 4.03 (m, 1H, H_{Fc}), 4.01 (m, 1H, H_{Fc}), 3.23 (s, 1H, CHₛₚ).

¹³C NMR (Acetone-D6, 100 MHz) : δ 145.84, 131.23, 128.31, 121.20, 96.90, 87.20, 74.51, 71.17, 69.71, 68.36, 68.25, 67.72, 65.80.

### C. 2-(4-bromophenyl)-2-ferrocenyl-2H-benzo[h]chromene (DM108)

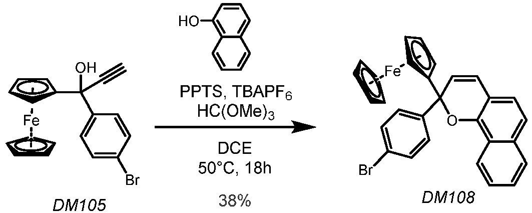

Under argon, 1-naphthol (916.2 mg, 6.35 mmol), PPTS (160.8 mg, 0.64 mmol) and TBAPF₆ (255.6 mg, 0.66 mmol) were dissolved in anhydrous 1,2-dichloroethane (100 mL). DM105 (2.56 g, 6.48 mmol) was dissolved in 1,2-dichloroethane (40 mL) and added to the mixture. Trimethyl orthoformate (2.4 mL, 21.94 mmol) was added. The reaction mixture was stirred at 50°C for 18 h. The reaction mixture was cooled to room temperature, water was added and the organic phase was extracted with DCM, dried on sodium sulphate and concentrated. Purification on silica gel using n-hexane/DCM (100:0 to 70:30) as eluent to give a black solid (1.26 g, 2.41 mmol, 38%).

¹H NMR (CDCl₃, 400 MHz) : δ 8.35 (d, J = 8.3 Hz, 1H, Hₐᵣ), 7.76 (d, J = 7.9 Hz, 1H, Hₐᵣ), 7.55 - 7.44 (m, 2H, Hₐᵣ), 7.34 (m, 5H, Hₐᵣ), 7.17 (d, J = 8.3 Hz, 1H, Hₐᵣ), 6.67 (d, J = 9.8 Hz, 1H, H_{pyran}), 6.24 (d, J = 9.8 Hz, 1H, H_{pyran}), 4.48 - 4.43 (m, 1H, H_{Fc}), 4.26 - 4.23 (m, 1H, H_{Fc}), 4.21 (m, 1H, H_{Fc}), 4.16 - 4.13 (m, 1H, H_{Fc}), 4.07 (s, 5H, H_{Fc}).

¹³C NMR (CDCl₃, 100 MHz) : δ 147.98, 145.12, 134.74, 130.98, 127.86, 127.35, 126.39, 126.01, 125.74, 124.58, 124.47, 122.88, 121.70, 121.28, 120.47, 115.10, 94.85, 70.29, 69.05, 68.18, 68.05, 66.25, 65.81.

### D. 4'-(2-ferrocenyl-2H-benzo[h]chromen-2-yl)-[1,1'-biphenyl]-4-carbaldehyde (DM110)

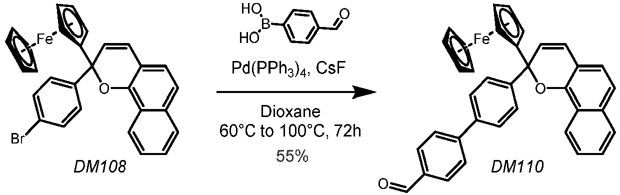

Under argon, DM108 (508.9 mg, 0.92 mmol), 4-Formylphenylboronic acid (482.0 mg, 3.21 mmol) and CsF (364.2 mg, 2.4 mmol) were dissolved in dioxane (40 mL). Pd(PPh₃)₄ (171.3 mg, 0.15 mmol) was added. The reaction mixture was stirred increasingly from 60°C to 100°C for 72 h. The reaction mixture was cooled to room temperature. The organic phase was extracted with ethyl acetate, dried on sodium sulphate and concentrated. Purification on silica gel using n-hexane/AcOEt (100:0 to 90:10) as eluent to give a black solid (272.9 mg, 0.48 mmol, 55%).

¹H NMR (CDCl₃, 400 MHz) : δ 10.00 (s, 1H, CHO), 8.42 (d, J = 8.3 Hz, 1H, Hₐᵣ), 7.87 (d, J = 8.3 Hz, 2H, Hₐᵣ), 7.77 (d, J = 8.3 Hz, 1H, Hₐᵣ), 7.61 (m, 4H, Hₐᵣ), 7.57 - 7.51 (m, 1H, Hₐᵣ), 7.51-7.44 (m, 3H, Hₐᵣ), 7.37 (d, J = 8.3 Hz, 1H, Hₐᵣ), 7.19 (d, J = 8.3 Hz, 1H, Hₐᵣ), 6.70 (d, J = 9.8 Hz, 1H, H_{pyran}), 6.31 (d, J = 9.8 Hz, 1H, H_{pyran}), 4.55 - 4.49 (m, 1H, H_{Fc}), 4.29 - 4.19 (m, 3H, H_{Fc}), 4.09 (s, 5H, H_{Fc}).

¹³C NMR (CDCl₃, 100 MHz) : δ 191.87, 148.15, 146.69, 146.56, 138.50, 135.12, 134.76, 130.21, 127.86, 127.51, 126.96, 126.37, 126.20, 126.14, 125.71, 124.66, 124.52, 122.73, 121.79, 120.39, 115.11, 95.14, 70.34, 69.08, 68.16, 68.01, 66.29, 65.80.

### E. (E)-2-cyano-3-(4'-(2-ferrocenyl-2H-benzo[h]chromen-2-yl)-[1,1'-biphenyl]-4-yl)acrylic acid (DiMi-4)

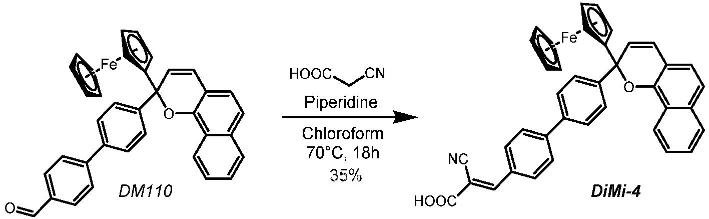

Under argon, DM110 (160.8 mg, 0.29 mmol) and cyanoacetic acid (52.0 mg, 0.61 mmol) were dissolved in anhydrous chloroform (40 mL). Some drops of piperidine were added. The reaction mixture was stirred at 70°C for 18 h. The reaction mixture was cooled to room temperature, water was added and the organic phase was extracted with DCM, washed with HCl 1M (aq.), washed with water, dried on sodium sulphate and concentrated. Purification on silica gel using DCM/methanol (100:0 to 90:10) as eluent to give a black solid (63.7 mg, 0.10 mmol, 35%).

¹H NMR (THF-D8, 400 MHz) : δ 8.32 (d, J = 8.2 Hz, 1H, Hₐᵣ), 8.08 (br s, 1H, H_{β to COOH}), 7.84 (d, J = 7.1 Hz, 2H, Hₐᵣ), 7.64 (d, J = 8.1 Hz, 1H, Hₐᵣ), 7.49 (m, 4H, Hₐᵣ), 7.40 (m, 3H, Hₐᵣ), 7.32 (t, J = 7.4 Hz, 1H, Hₐᵣ), 7.24 (d, J = 8.3 Hz, 1H, Hₐᵣ), 7.09 (d, J = 8.3 Hz, 1H, Hₐᵣ), 6.61 (d, J = 9.8 Hz, 1H, H_{pyran}), 6.35 (d, J = 9.8 Hz, 1H, H_{pyran}), 4.42 (s, 1H, H_{Fc}), 4.16 (s, 1H, H_{Fc}), 4.12 (s, 1H, H_{Fc}), 4.09 (s, 1H, H_{Fc}), 3.96 (s, 5H, H_{Fc}), 2.56 (br s, COOH).

¹³C NMR (101 MHz, THF) : δ 148.09, 146.40, 138.40, 134.92, 131.58, 130.82, 127.64, 126.95, 126.64, 126.28, 126.05, 125.41, 124.61, 124.43, 122.26, 121.59, 120.11, 115.41, 95.30, 80.76, 68.77, 67.77, 67.71, 67.01, 65.60.

### I.6. Synthesis of ((E)-2-cyano-3-(4'-(2-ferrocenyl-5,6-dimethyl-2H-benzo[h]chromen-2-yl)-[1,1'-biphenyl]-4-yl)acrylic acid) (DiMi-5)

### A. 3,4-dimethylnaphthalen-1-ol

The synthesis of 3,4-dimethylnaphthalen-1-ol is already reported by Brun *et al,* 2002 [15].

### B. 2-(4-bromophenyl)-2-ferrocenyl-5,6-dimethyl-2H-benzo[h]chromene (DM109)

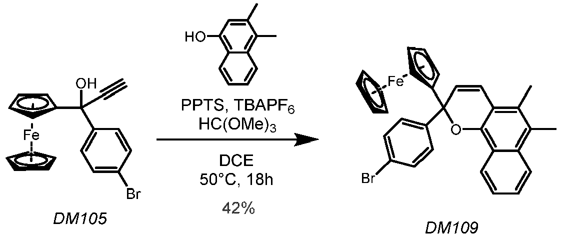

Under argon, 3,4-dimethylnaphthalen-1-ol (856.3 mg, 4.97 mmol), PPTS (133.8 mg, 0.53 mmol) and TBAPF₆ (212.6 mg, 0.55 mmol) were dissolved in anhydrous 1,2-dichloroethane (100 mL). DM105 (2.09 g, 5.29 mmol) was dissolved in 1,2-dichloroethane (40 mL) and added to the mixture. Trimethyl orthoformate (2.0 mL, 18.28 mmol) was added. The reaction mixture was stirred at 50°C for 18 h. The reaction mixture was cooled to room temperature, water was added and the organic phase was extracted with DCM, dried on sodium sulphate and concentrated. Purification on silica gel using n-hexane/DCM (100:0 to 70:30) as eluent to give a grey solid (1.15 g, 2.10 mmol, 42%).

¹H NMR (CDCl₃, 400 MHz) : δ 8.39 (m, 1H, Hₐᵣ), 7.95 (m, 1H, Hₐᵣ), 7.55 - 7.42 (m, 2H, Hₐᵣ), 7.37 (d, J = 8.6 Hz, 2H, Hₐᵣ), 7.29 (d, J = 8.6 Hz, 2H, Hₐᵣ), 6.95 (d, J = 10.0 Hz, 1H, Hₐᵣ), 6.34 (d, J = 10.0 Hz, 1H, Hₐᵣ), 4.46 (m, 1H, H_{Fc}), 4.23 (m, 1H, H_{Fc}), 4.20 (m, 1H, H_{Fc}), 4.14 (m, 1H, H_{Fc}), 4.10 (s, 5H, H_{Fc}), 2.52 (s, 3H, CH₃), 2.43 (s, 3H, CH₃).

¹³C NMR (CDCl₃, 100 MHz) : δ 146.35, 145.02, 133.50, 130.87, 129.35, 127.32, 126.37, 126.19, 124.53, 124.02, 123.73, 123.44, 122.09, 121.10, 120.95, 115.31, 94.99, 78.90, 69.06, 68.15, 68.03, 66.25, 65.83, 15.72, 14.55.

### C. 4'-(2-ferrocenyl-5,6-dimethyl-2H-benzo[h]chromen-2-yl)-[1,1'-biphenyl]-4-carbaldehyde (DM111)

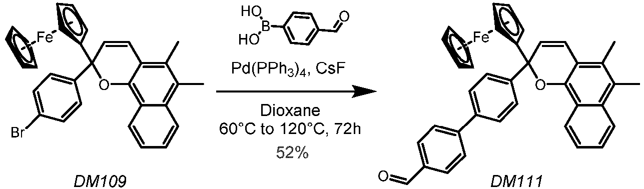

Under argon, DM109 (504.6 mg, 0.92 mmol), 4-Formylphenylboronic acid (470.2 mg, 3.14 mmol) and CsF (344.8 mg, 2.27 mmol) were dissolved in dioxane (40 mL). Pd(PPh₃)₄ (218.1 mg, 0.19 mmol) was added. The reaction mixture was stirred increasingly from 60°C to 120°C for 72 h. The reaction mixture was cooled to room temperature. The organic phase was extracted with ethyl acetate, dried on sodium sulphate and concentrated. Purification on silica gel using n-hexane/AcOEt (100:0 to 90:10) as eluent to give a grey solid (272.9 mg, 0.48 mmol, 52%).

¹H NMR (CDCl₃, 400 MHz) : δ 9.98 (s, 1H, CHO), 8.52 - 8.42 (m, 1H, Hₐᵣ), 8.01- 7.92 (m, 1H, Hₐᵣ), 7.84 (d, *J* = 8.3 Hz, 2H, Hₐᵣ), 7.59 (dd, *J* = 8.2, 1.4 Hz, 4H, Hₐᵣ), 7.54 - 7.46 (m, 2H, Hₐᵣ), 7.41 (d, *J* = 8.4 Hz, 2H, Hₐᵣ), 6.97 (d, *J =* 10.0 Hz, 1H, H_{pyran}), 6.41 (d, *J =* 10.0 Hz, 1H, H_{pyran}), 4.56 - 4.49 (m, 1H, H_{Fc}), 4.28 - 4.23 (m, 1H, H_{Fc}), 4.22 (d, J = 1.2 Hz, 2H, H_{Fc}), 4.16 - 4.05 (m, 5H, H_{Fc}), 2.52 (s, 3H, CH₃), 2.44 (s, 3H, CH₃).

¹H NMR (CDCl₃, 400 MHz) : δ 191.86, 146.70, 146.51, 138.31, 135.05, 133.50, 130.17, 129.41, 127.44, 126.83, 126.38, 126.36, 126.09, 124.51, 124.02, 123.63, 123.50, 122.20, 120.74, 115.29, 95.29, 79.13, 77.23, 69.08, 68.13, 67.98, 66.27, 65.81, 15.72, 14.56.

### D. (E)-2-cyano-3-(4'-(2-ferrocenyl-5,6-dimethyl-2H-benzo[h]chromen-2-yl)-[1,1'-biphenyl]-4-yl)acrylic acid (DiMi-5)

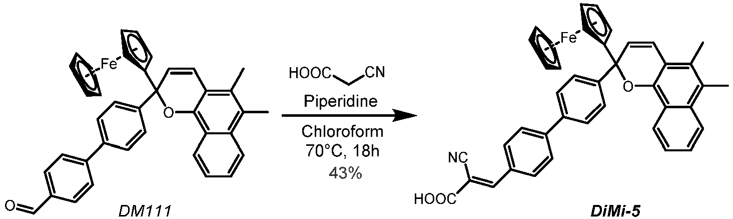

Under argon, DM111 (261.0 mg, 0.45 mmol) and cyanoacetic acid (79.8 mg, 0.94 mmol) were dissolved in anhydrous chloroform (60 mL). Some drops of piperidine were added. The reaction mixture was stirred at 70°C for 18 h. The reaction mixture was cooled to room temperature, water was added and the organic phase was extracted with DCM, washed with HCl 1M (aq.), washed with water, dried on sodium sulphate and concentrated. Purification on silica gel using DCM/methanol (100:0 to 90:10) as eluent to give a brown solid (126.0 mg, 0.20 mmol, 43%).

¹H NMR (THF-D8, 400 MHz) : δ 8.41-8.34 (m, 1H, Hₐᵣ), 8.11 (s, 1H, H_{β to COOH}), 7.93 (d, J = 8.2 Hz, 2H, Hₐᵣ), 7.87 - 7.81 (m, 1H, Hₐᵣ), 7.56 (d, J = 8.3 Hz, 2H, Hₐᵣ), 7.52 (d, *J* = 8.4 Hz, 2H, Hₐᵣ), 7.40 (s, 2H, Hₐᵣ), 7.39 - 7.32 (m, 2H, Hₐᵣ), 6.92 (d, J = 10.0 Hz, 1H, H_{pyran}), 6.46 (d, *J* = 10.0 Hz, 1H, H_{pyran}), 4.48 - 4.41 (m, 1H, H_{Fc}), 4.20 - 4.15 (m, 1H, H_{Fc}), 4.14 - 4.09 (m, 1H, H_{Fc}), 4.07 (m, 1H, H_{Fc}), 4.00 (s, 5H, H_{Fc}), 2.40 (s, 3H, CH₃), 2.32 (s, 3H, CH₃).

¹³C NMR (THF-D8, 100 MHz) : δ 163.13, 152.88, 146.69, 146.56, 144.78, 138.01, 133.57, 131.28, 130.87, 129.16, 127.10, 126.80, 126.25, 126.07, 124.22, 123.75, 123.67, 123.21, 122.01, 120.29, 115.45, 103.45, 95.38, 79.24, 68.79, 67.74, 67.68, 67.01, 66.79, 65.59, 14.74, 13.61.

### II. Characterization of the compounds

### II.1. Methods

### A. Absorption spectroscopy and kinetics

UV-Vis absorption spectra are recorded on solutions of the dyes prepared in Toluene with a concentration of 2x10⁻⁵ M. To study the open form (OF) absorption, after measuring the absorption of the closed form (CF), the solutions are irradiated with a wide-emission lamp for around 5 min, or until reaching the PSS (equilibrium between CF and OF under constant irradiation).

To study the successful reversibility of the coloration process, the kinetics of discoloration are obtained by irradiating the solution for 5 min and then recording the evolution over time of the characteristic peak of the OF of each dye upon turning off the irradiation.

### B. Cyclic voltammetry

Cyclic voltammetry experiments were conducted using a BioLogic VSP Potentiostat. A three-electrode configuration was employed, consisting of a glassy carbon working electrode (diameter: 3 mm), a platinum wire counter electrode, and a silver/silver nitrate (Ag/AgNO₃) reference electrode. The electrolyte solution was made solubilizing TBAPF₆ in anhydrous dichloromethane (10⁻¹ M) and the sample concentration was 2x10⁻³ M. Ferrocene was used as external potential standard. For all measurements, the solution was deoxygenated by bubbling nitrogen gas before the analysis. To study the OF of each dye the solution are irradiated with panchromatic light for 10 min and the cyclic voltammetry measurement is done immediately after.

### C. Computational experiments

Density Functional Theory (DFT) calculations were performed using the Amsterdam Density Functional (ADF) suite. Firstly, the geometry of the molecule is optimized using a revPBE GGA functional corrected for dispersion using Grimme 3 methodology with basis sets TZ2P, and then a single-point modelling using B3LYP hybrid functional corrected for dispersion with basis sets TZ2P in a COSMO model for dichloromethane is performed.

### II.2. Results

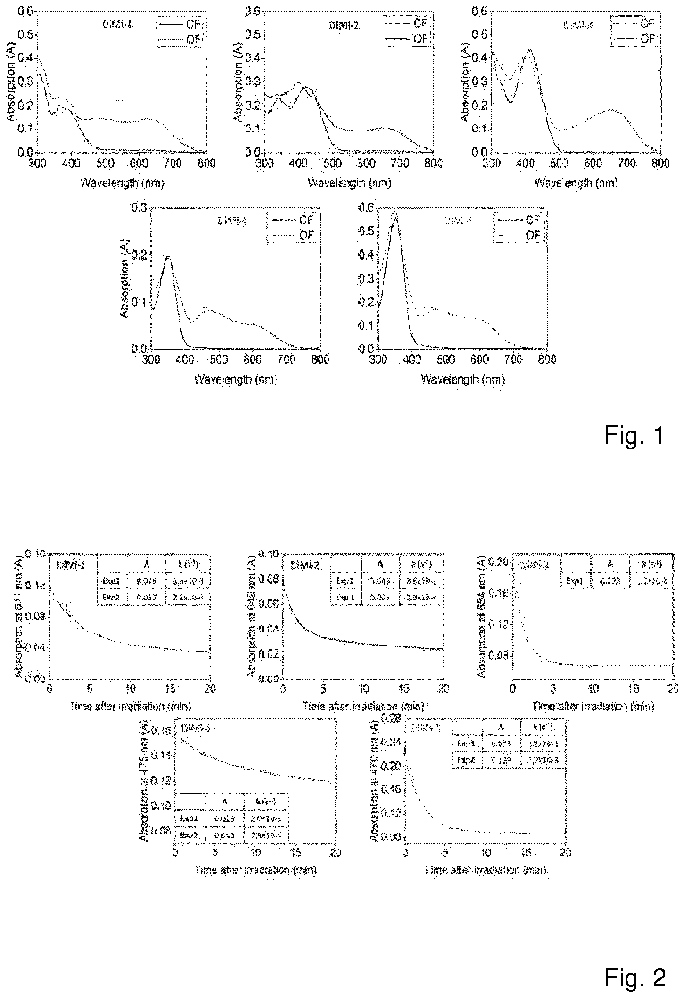

All the dyes are photochromic and most of them present a flat extended absorption along the visible describing a panchromatic behaviour or neutral, grey coloration (Figure 1).

All the dyes present coloration reversibility (Figure 2). The dyes that are more hindered (DiMi-3 and DiMi-5) are the ones with quickest kinetics, hence a quicker closing of the structure from the active open-form to the inactive closed-form. More specifically, by introducing a highly sterically hindered group like the indeno bridge in DiMi-3, we can obtain a dye that decays from the colored state to the ground state with a mono-exponential decay.

Since the dyes can be attached on mesoporous layers of TiO₂ and have energy levels compatible for use in DSSCs their photovoltaic performance is evaluated. The naphthopyran moiety is linked on one side to a ferrocenyl electron donor group and on the other side to an electron withdrawing anchoring group to give a push-pull structure with energy levels compatible for use as sensitizers in DSSCs.

In order to be used in DSSCs, the dyes must have energy levels that are compatible with the other elements of the device. To this extend, the dyes according to the invention have energy levels that allow their use in DSSCs.

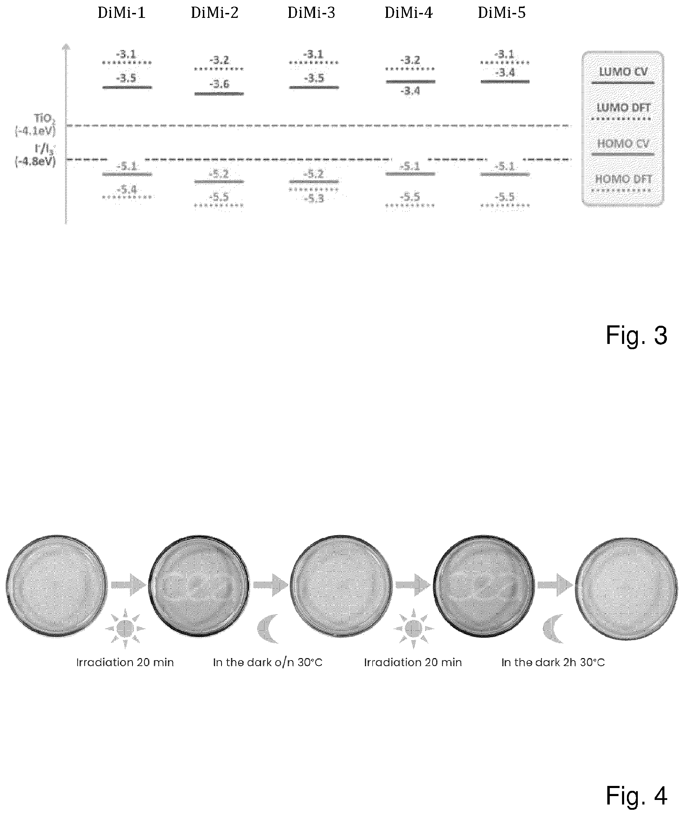

The electrochemical properties of the molecules was studied to verify their compatibility with the other components of the device, hence the TiO₂ electrode and the redox mediator. By performing cyclic voltammetry and UV-visible spectroscopy on the dyes in the OF, the experimental values for their HOMO and LUMO energy levels were obtained. This allowed to verify that the photoactive dyes present LUMO levels higher than the conduction band of the titania allowing for effective electron injection and HOMO levels lower than the reduction potential of the iodine-based electrolyte allowing for effective dye regeneration. This analysis was completed with DFT calculation assessing compatibility of the dyes with the other components of the solar cells. All the energy levels are shown in Figure 3.

### III. Polymeric film fabrication and characterization

### III.1. Methods

### A. Preparation of the films

The films are prepared in a glass Petri dish by slowly evaporating in the dark at ambient atmosphere a solution of PMMA (M_{w} 350,000) or polybutadiene (M_{w} 200,000-300,000) 2% and DiMi-5 0.05% in tetrahydrofuran (THF).

### B. Absorption spectroscopy

The UV-Vis absorption spectrum of the film in the Petri dish is measured with a Agilent Cary 60 UV-VIS Spectrophotometer. Then the films are partially covered and irradiated with panchromatic light for 10 min. The UV-Vis absorption spectrum is measured again and compared to the one before irradiation.

### C. Color Rendering Index (CRI) and Average Visible Transmittance (AVT) determination

The CRI and AVT are measured with a Python program that uses the same integration method of the one reported by Fauvel *et al,* 2023 [9].

### III.2. Results

Since the optical properties of the dyes linked to their photochromism are quite outstanding in solution, because the dyes show panchromatic absorption and neutral colors, it was decided to evaluate the potential for in the solid state.

The dyes are introduced in a polymeric matrix to prepare some **polymeric film that are photochromic and panchromatic.** The main motivation behind this objective resides in the lack of dyes with these characteristics in the ophthalmic applications, hence to make **glasses that can change color darkening in the sun, while maintaining a neutral**

### coloration.

For the purpose of this study, the dye **DiMi-5** is studied thanks to its flat absorption with neutral coloration and its fast kinetics of discoloration. As for the support polymeric matrix, two materials are studied. The first polymer is Poly(methyl methacrylate) (average M_{w} 350,000) usually used to study isomerization of photochromic dyes.

The best results in terms of dispersion in the polymeric matrix and photochromism at the solid state are observed in the PMMA matrix, using THF as a solvent and a concentration of the dye in the polymer of 2.5%. The matrix is irradiated with a white light for 10 minutes while being half covered. Color change is observed obtaining a grey panchromatic matrix in the open form. Keeping the irradiated film in the dark overnight makes the open form revert to the closed form with discoloration of the film to the initial state.

The results are shown in Figure 4. This proves that the molecule can be photochromic while being suspended in a polymeric matrix obtaining **photochromic panchromatic films.**

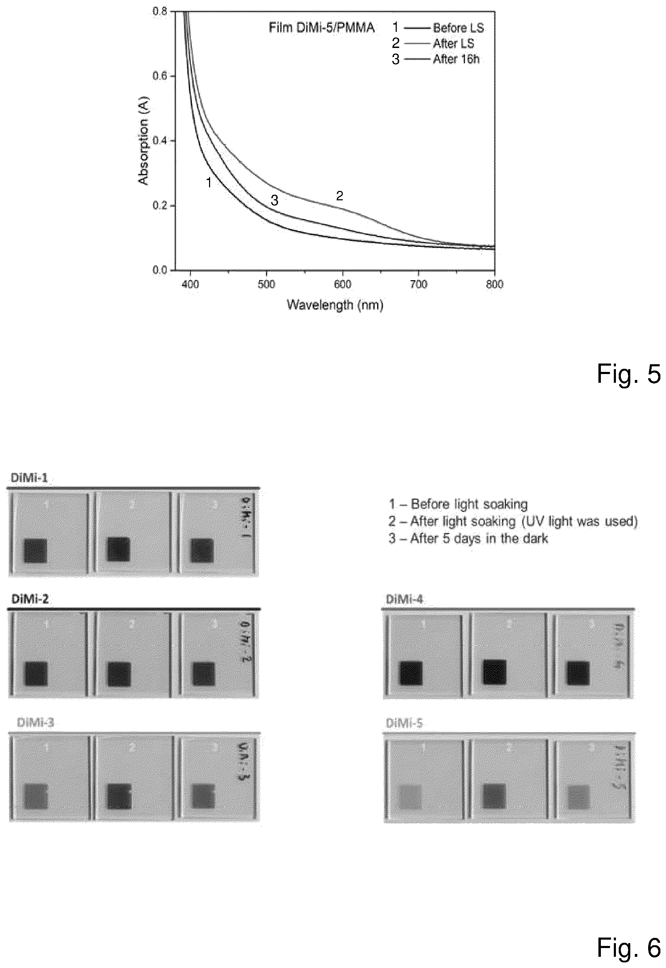

The absorption spectra of the irradiated part of the film were measured before and after light soaking. The results presented in Figure 5 show that after irradiation there is indeed an increase of the absorption band compatible with the color change of the dye in solution with a characteristic flat shape linked to panchromatism in the OF. Additionally the absorption spectrum was also determined after keeping the film in the dark showing remarkable discoloration of the film.

Lastly, using the spectra in before and after the irradiation, we were able to calculate the CRI and AVT of the film. The results show :
- a value of AVT of 0.76 before irradiation and 0.61 after, describing a film that gets less light through after light soaking; and
- a CRI value of 96.9 before and 98.1 after irradiation, describing a neutral coloration material.

These experiments confirm that implementing a ferrocene moiety in a photochromic dye bases on naphthopyran unit makes it possible to **obtain** materials **that** present a **panchromatic behavior in** their **colored form,** paving the way to possible applications in ophtalmic domains.

### IV. Preparation of TiO₂ electrodes sensitized with the dyes

### IV.1. Method

The preparation of TiO₂ electrodes sensitized with the dyes was performed according to the method described in Mwalukuku *et al,* 2023 [14]. Transparent electrodes were employed.

### IV.2. Results

The results of the study of the coloration behavior of the sensitized electrode are presented in Figure 6. It is thus observed that at the solid state the molecules **DiMi-1, DiMi-2** and **DiMi-4,** upon grafting lose their photochromic properties due most likely to irreversible isomerization of the structure to the OF. On the other hand, the molecules **DiMi-3** and **DiMi-5** are still photochromic showing a reversible changing in coloration after light soaking.

### V. Solar cell fabrication and characterization

### V.1. Method

### A. Manufacture of solar cells

The manufacture of the solar cells was performed according to the method described in Mwalukuku *et al,* 2023 **[14].** Transparent electrodes were employed.

### B. J-V curves measurement

The J-V curves measurements were performed according to the method described in Mwalukuku *et al,* 2023 **[14].** Upon irradiation, different J-V curves are measured while keeping the solar cell under irradiation. We consider reaching the PSS when the PCE do not increase over 0.02% between two measurements spaced 2 min. The measurement at the PSS is the one used for the data analysis.

### V.2. Results

To verify finally the photovoltaic properties of the dyes, solar cells implementing each one of the molecule as sensitizer were prepared. Two different compositions of electrolytes are used. The first composition tested is the one optimized for DSSCs using photochromic dyes usually developed in our group (Acetonitrile, 0.09M I₂, 0.5M Lil). The second composition is the one reported in literature for DSSCs using dyes containing ferrocenyl groups (Acetonitrile, 0.05M I₂, 0.1M Lil, 0.5M TBP, 0.6M DMPII) **[16-19].** For each condition two cells are prepared using transparent TiO₂ electrodes, and a dying bath using a ratio of 1:10 dye/CDCA (chenodeoxycholic acid) as a co-absorbent.

The obtained cells are then characterized performing JV measurements in a solar simulator (1000 W/m²) to determine the performance in terms of power conversion efficiency (PCE%) before and after irradiation. Unfortunately, we found that, the synthesized dyes lose their ability to change color in a complete DSSC configuration, but they retain their photosensitizing behaviour and can absorb light and convert it into electricity in dye-sensitized solar cells.

The results in terms of best performance measured are shown in Table 1. Comparing the data before and after prolonged light soaking, we can see that not all the dyes are stable in these conditions and the performance decrease substantially for some of them. However, the dyes **DiMi-1, DiMi-2 and DiMi-3 still show interesting photovoltaic properties after light irradiation.**

**Table 1**

| **PCE(%) max after irradiation** | **DiMi-1** | **DiMi-2** | **DiMi-3** | **DiMi-4** | **DiMi-5** |
|---|---|---|---|---|---|
| Iodine | 0.85 | 1.47 | 1.91 | 0.30 | 0.46 |
| Low conc. iodine | 1.15 | 1.40 | 2.23 | 0.21 | 0.34 |

It has been demonstrated that the dyes according to the invention can act as sensitizers on semi-transparent dye-sensitised solar cells. As shown, some of the dyes are locked in either colored state in DSSCs and that they can photosensitized the electrode in dye solar cells while maintaining neutral coloration.

### BIBLIOGRAPHY

**[1]** Anguille et al, 1998, "New ferrocenyl-naphthopyrans with original photochromic behaviour", Heterocycl. Commun., vol. 4, pages 63-70.
**[2]** Anguille et al, 2001, "Synthesis and photochromic properties of ferrocenyl substituted benzo- and dibenzochromenes", J. Chem. Soc. Perkin Trans. 2, pages 639-644.
**[3]** Nazeeruddin et al, 2005, "Combined experimental and DFT-TDDFT computational study of photoelectrochemical cell ruthenium sensitizers", J. Am. Chem. Soc., vol. 127, pages 16835-16847.
**[4]** Ito et al, 2008, "Fabrication of thin film dye sensitized solar cells with solar to electric power conversion efficiency over 10%", Thin Solid Films, vol. 516, pages 4613-4619.
[5] Xu et al, 2018, "Increasing the Efficiency of Organic Dye-Sensitized Solar Cells over 10.3% Using Locally Ordered Inverse Opal Nanostructures in the Photoelectrode", Adv. Funct. Mater., vol. 28, 1706291.
[6] Godfroy et al, 2021, "Benzothiadiazole-based photosensitizers for efficient and stable dye-sensitized solar cells and 8.7% efficiency semi-transparent mini-modules", Sustainable Energy Fuels, vol. 5, pages 144-153.
**[7]** International application WO 2018/215371 in the name of CEA and published on November 29, 2018.
**[8]** Huaulmé et al, 2020, "Photochromic dye-sensitized solar cells with light-driven adjustable optical transmission and power conversion efficiency", Nat. Energy, vol. 5, pages 468-477.
[9] Fauvel et al, 2023, "Push-pull photochromic dyes for semi-transparent solar cells with light-adjustable optical properties and high color-rendering index", Chem. Sci., vol. 14, pages 8497-8506.
**[10]** Mishra et al, 2014, "Synthesis, optical and electrochemical properties of new ferrocenyl substituted triphenylamine based donor-acceptor dyes for dye sensitized solar cells", RSC Advances, vol. 4, pages 34904-34911.
**[11]** International application WO 2009/109499 in the name of BASF SE and published on September 11, 2009.
**[12]** Mishra et al, 2009, "Metal-Free Organic Dyes for Dye-Sensitized Solar Cells: From Structure: Property Relationships to Design Rules", Angew. Chem. Int. Ed., vol. 48, pages 2474-2499.
**[13]** Kalyanasundaram, 2010, "Dye Sensitized Solar Cells", (ed.), EPFL Press, ISBN: 978-2-940222-36-0 CRC Press ISBN 978-1-4398-0866-5.
**[14]** Mwalukuku et al, 2023, "Strategies to Improve the Photochromic Properties and Photovoltaic Performances of Naphthopyran Dyes in Dye-Sensitized Solar Cells", Adv. Energy Mater., vol. 13, 2203651.
**[15]** Brun et al, 2002, "Metallocenyl-[2H]naphtho[1,2-b]pyrans: metal effect on the photochromic behaviour", Materials, Nanomaterials and Synthesis, vol. 16, pages 271-276.
**[16]** Chauhan et al, 2016, "Ferrocenyl chalcones with phenolic and pyridyl anchors as potential sensitizers in dye-sensitized solar cells", RSC Adv., vol. 6, pages 97664-97665.
**[17]** Yadav et al, 2017, "Ferrocenyl benzimidazole with carboxylic and nitro anchors as potential sensitizers in dye-sensitized solar cells", New J. Chem., vol. 41, pages 7312-7321.
**[18]** Prabu et al, 2023, "Enhancement of photovoltaic performance in ferrocenyl π-extended multi donor-π-acceptor (D-D'-π-A) dyes using chenodeoxycholic acid as a dye co-adsorbent for dye sensitized solar cells", RSC Adv., vol. 13, pages 9761-9772.
**[19]** Singh et al, 2018, "1,1'-Bis(diphenylphosphino)ferrocene-appended nickel(ii) dithiolates as sensitizers in dye-sensitized solar cells", New J. Chem., vol. 42, pages 9306-9316.

## Claims

1. Panchromatic photochromic dye presenting the following formula (I): 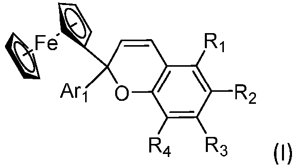
in which
- the radical Ar₁ represents an aryl group optionally substituted;
- the radicals R₁ to R₄, identical or different, represent a hydrogen, a halogen, a cyano group (-CN), a nitro group (-NO₂), an alkyl group optionally substituted, an aryl group optionally substituted, an alkylaryl group optionally substituted or an arylalkyl group optionally substituted; the radicals R₁ and R₂ may form with the carbons to which they are attached a ring system eventually substituted, the radicals R₂ and R₃ may form with the carbons to which they are attached a ring system eventually substituted and the radicals R₃ and R₄ may form with the carbons to which they are attached a ring system eventually substituted; and
in which at least one element selected in the group consisting of the radical Ar₁, the radical R₁, the radical R₂, the radical R₃, the radical R₄, the ring system formed by the radicals R₁ and R₂ with the carbons to which they are attached, the ring system formed by the radicals R₂ and R₃ with the carbons to which they are attached and the ring system formed by the radicals R₃ and R₄ with the carbons to which they are attached is a segment -L-A or is substituted by a segment -L-A, with
- L- representing a covalent bond or a spacer segment and particularly a pi-conjugated spacer segment, and
- A representing an electron attractor segment able to form a covalent bond with a semi-conductor.

2. Panchromatic photochromic dye according to claim 1, wherein said panchromatic photochromic dye presents the following formula (III): 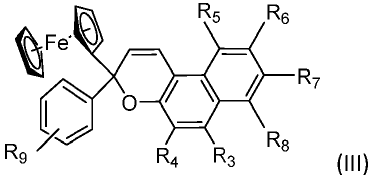
in which
- the radicals R₃ and R₄ are as defined in claim 1;
- the radicals R₅ to R₈, identical or different, represent a hydrogen, a halogen, a cyano group (-CN), a nitro group (-NO₂), an alkyl group optionally substituted, an aryl group optionally substituted, an alkylaryl group optionally substituted, an arylalkyl group optionally substituted, or a segment -L-A; the radicals R₅ and R₆ may form with the carbons to which they are attached a ring system eventually substituted, the radicals R₆ and R₇ may form with the carbons to which they are attached a ring system eventually substituted and the radicals R₇ and R₈ may form with the carbons to which they are attached a ring system eventually substituted and
- the radical R₉ represents a hydrogen, a halogen, a cyano group (-CN), a nitro group (-NO₂), an alkyl group optionally substituted, an aryl group optionally substituted, an alkylaryl group optionally substituted, an arylalkyl group optionally substituted or a segment -L-A; and
in which at least one element selected in the group consisting of the radical R₃, the radical R₄, the radical R₅, the radical R₆, the radical R₇, the radical R₈ and the radical R₉ is a segment -L-A or is substituted by a segment -L-A.

3. Panchromatic photochromic dye according to claim 1, wherein said panchromatic photochromic dye presents the following formula (V): 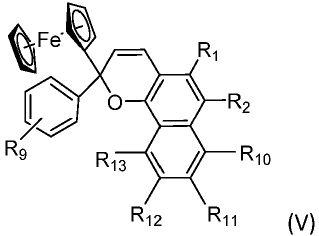
in which
- the radicals R₁ and R₂ are as defined in claim 1,
- the radical R₉ is as defined in claim 2,
- the radicals R₁₀ to R₁₃, identical or different, represent a hydrogen, a halogen, a cyano group (-CN), a nitro group (-NO₂), an alkyl group optionally substituted, an aryl group optionally substituted, an alkylaryl group optionally substituted, an arylalkyl group optionally substituted or a segment -L-A; and
in which at least one element selected in the group consisting of the radical R₁, the radical R₂, the radical R₉, the radical R₁₀, the radical R₁₁, the radical R₁₂ and the radical R₁₃ is a segment -L-A or is substituted by a segment -L-A.

4. Panchromatic photochromic dye according claim 3, wherein the radical R₁ represents a hydrogen and the radical R₂ is a segment -L-A or an aryl group substituted by a segment -L-A.

5. Panchromatic photochromic dye according claim 3, wherein the radicals R₁ and R₂ are identical and represent a hydrogen or an alkyl group optionally substituted and the radical R₉ is a segment -L-A or an aryl group substituted by a segment -L-A.

6. Panchromatic photochromic dye according to claim 1, wherein said panchromatic photochromic dye presents the following formula (VIII): 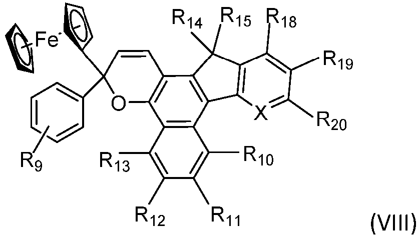
in which
- X represents C(R₂₅) or N;
- the radical R₉ is as defined in claim 2;
- the radicals R₁₀ to R₁₃ are as defined in claim 3;
- the radicals R₁₄ and R₁₅, identical or different, represent a hydrogen, a halogen, a cyano group (-CN), a nitro group (-NO₂), an alkyl group optionally substituted, an aryl group optionally substituted, an alkylaryl group optionally substituted or an arylalkyl group optionally substituted; the radicals R₁₄ and R₁₅ may form together a =O or =C(R₂₃)(R₂₄) group with the radicals R₂₃ and R₂₄, identical or different, representing a hydrogen, a halogen, a cyano group (-CN), a nitro group (-NO₂), an alkyl group optionally substituted, an aryl group optionally substituted, an alkylaryl group optionally substituted or an arylalkyl group optionally substituted; and
- the radicals R₁₈ to R₂₀, identical or different, represent a hydrogen, a halogen, a cyano group (-CN), a nitro group (-NO₂), an alkyl group optionally substituted, an aryl group optionally substituted, an alkylaryl group optionally substituted, an arylalkyl group optionally substituted or a segment -L-A;
- the radical R₂₅ represents a hydrogen, a halogen, a cyano group (-CN), a nitro group (-NO₂), an alkyl group optionally substituted, an aryl group optionally substituted, an alkylaryl group optionally substituted or an arylalkyl group optionally substituted; and
in which at least one element selected in the group consisting of the radical R₉, the radical R₁₀, the radical R₁₁, the radical R₁₂, the radical R₁₃, the radical R₁₄, the radical R₁₅, the radical R₁₈, the radical R₁₉, the radical R₂₀, the radical R₂₃, the radical R₂₄ and the radical R₂₅ is a segment -L-A or is substituted by a segment -L-A.

7. Panchromatic photochromic dye according to claim 1, wherein the panchromatic photochromic dye presents the following formula (X): 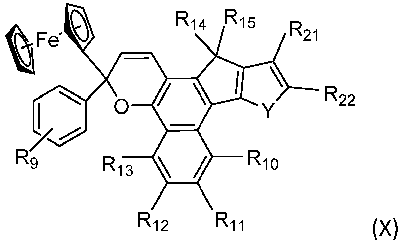
in which
- the radical R₉ is as defined in claim 2,
- the radicals R₁₀ to R₁₃ are as defined in claim 3;
- the radicals R₁₄ and R₁₅ are as defined in claim 6;
- Y represents C(R₂₆)(R₂₇), C(=O), S, Se, O, N(R₂₈), P(R₂₉) or Si(R₃₀)(R₃₁);
- the radicals R₂₁ and R₂₂, identical or different, represent a hydrogen, a halogen, a cyano group (-CN), a nitro group (-NO₂), an alkyl group optionally substituted, an aryl group optionally substituted, an alkylaryl group optionally substituted, an arylalkyl group optionally substituted or a segment -L-A;
- the radicals R₂₆ to R₃₁, identical or different, represent a hydrogen, an alkyl group optionally substituted, an aryl group optionally substituted, an alkylaryl group optionally substituted or an arylalkyl group optionally substituted; and
in which at least one element selected in the group consisting of the radical R₉, the radical R₁₀, the radical R₁₁, the radical R₁₂, the radical R₁₃, the radical R₁₄, the radical R₁₅, the radical R₂₁, the radical R₂₂, the radical R₂₃, the radical R₂₄ and the radical R₂₅ is a segment -L-A or is substituted by a segment -L-A.

8. Panchromatic photochromic dye according to any one of claims 1 to 7, wherein said electron acceptor segment is a carboxylic acid group, a cyanoacrylic acid group, a phosphonic group, a dithiocarboic group or a group corresponding to any of the following formulas:

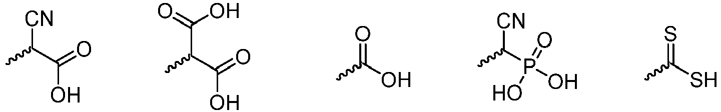

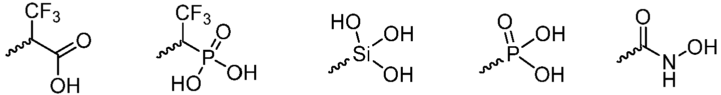

9. Panchromatic photochromic dye according to any one of claims 1 to 8, wherein said spacer L is an alkenylene or alkynylene chain optionally substituted or an arylene chain optionally substituted.

10. Panchromatic photochromic dye according to any one of claims 1 to 9, wherein said panchromatic photochromic dye according to the present invention is chosen from the following compounds:

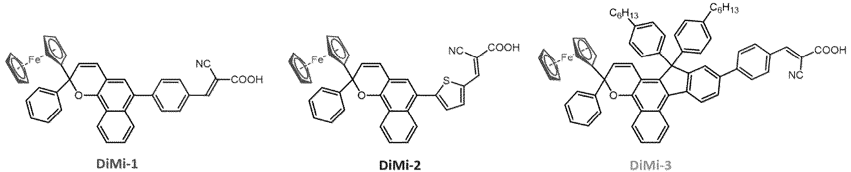

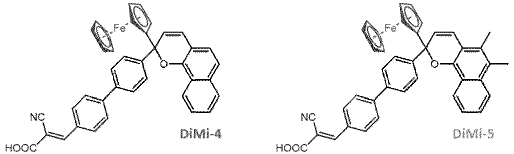

11. Composition containing at least one panchromatic photochromic dye as defined in any one of claims 1 to 10

12. Photochromic coating comprising at least one panchromatic photochromic dye as defined in any one of claims 1 to 10.

13. Photochromic coating according to claim 12, wherein said at least one panchromatic photochromic dye is dispersed in a polymer matrix.

14. Photochromic coating according to claim 13, wherein said photochromic coating is applied to rigid transparent substrates such as glass and organic plastic substrates used for optical applications, for example, in ophthalmic or solar lens; lighting curtains; indoor blinds; window glasses such as building and house glasses; automobile glasses such as automobile side-window glasses and automobile windshield glasses; portholes; airplane windows; and train windows.

15. Photochromic coating according to claim 12, wherein said at least one panchromatic photochromic dye is grafted onto a metal oxide surface.

16. Use of a panchromatic photochromic dye as defined in any one of claims 1 to 10, as photosensitizer in a photovoltaic device such as a dye-sensitized solar cell (DSSC).

17. Photovoltaic device having a nanostructured semi-conductor metal oxide layer sensitized by a panchromatic photochromic dye as defined in any one of claims 1 to 10.
